# EUROPEAN PATENT SPECIFICATION

(11) **EP 2 059 133 B1**
(45) Date of publication and mention of the grant of the patent: **12.06.2019**
(21) Application number: 07755477.2
(22) Date of filing: 16.04.2007
(51) Int. Cl.: A23G 3/00, A23G 4/20, A23G 3/54

(54) **CENTER-FILL CONFECTIONERY AND CHEWING GUM COMPOSITIONS CONTAINING SUSPENDED SACCHARIDE PARTICLES**
SUSPENDIERTEN SÜSSSTOFFPARTIKEL ENTHALTENDE ZUSAMMENSETZUNGEN GEFÜLLTER SÜSSWAREN UND KAUGUMMIS
COMPOSITIONS DE SUCRERIE ET DE CHEWING GUM AVEC FOURRAGE CONTENANT DES PARTICULES DE SACCHARIDE EN SUSPENSION

(30) Priority: 08.09.2006 US 843056 P; 16.02.2007 US 707713
(43) Date of publication of application: 20.05.2009
(73) Proprietor: Intercontinental Great Brands LLC, East Hanover, NJ 07936 (US)
(72) Inventor: MASSEY, Craig, Lake Hiawatha, NJ 07034 (US)
(74) Representative: Wilson Gunn
(86) International application number: PCT/US2007/009223
(87) International publication number: WO 2008/030274

(56) References cited:
- EP-A1- 0 086 856
- WO-A-2006/039487
- WO-A2-2007/070754
- WO-A2-2007/100721
- US-A- 4 316 915
- US-A- 4 466 983
- US-A1- 2006 045 934
- US-A1- 2006 051 456
- US-B1- 6 280 780

## Description

### CROSS-REFERENCE TO RELATED APPLICATIONS:

This application claims priority to U.S. Application No. 11/707,713, filed February 16, 2007, which claims the benefit of U.S. Provisional Application No. 60/843,056, filed September 8, 2006.

### FIELD

The present invention includes compositions for a multi-layer center-filled confectionery or chewing gum product. The individual confectionery or gum pieces which include the compositions of the present invention include a center surrounded by a confectionery or gum region. The center includes a fluid carrier and saccharide, particularly polyol, particles suspended therein.

### BACKGROUND

Liquid or center-filled gum and other confectionery products are in popular demand today. Typically, these products have a solid exterior portion and a soft or liquid-type center. The outer portion can be chewing gum or bubble gum of some type, while the liquid center portion can be a flavored material typically having a syrup-like consistency.

There are also products having a chewing gum or bubble gum core with a hard sugar or sugarless shell on the exterior. These products include, for example well-known pellet gum products sold under the brand names Chiclets®, Clorets®, and Dentyne-Ice®. Both liquid filled and coated gum products are in popular demand.

There also is a consumer demand for products that impart cooling in the oral cavity upon consumption, thereby providing a refreshing feeling. Chewing gum and confectionery products have been provided which include flavors or physiological cooling agents that provide a cooling perception. It would be desirable to provide center-filled products that impart an enhanced cooling perception upon consumption.

### SUMMARY

The invention comprises a confectionery product as defined in claim 1, and methods for its manufacture, and for its use in providing a cooling effect. In some embodiments, there is provided a chewing gum composition including: a center-fill composition containing a fluid carrier and polyol particles suspended in the fluid carrier wherein said polyol particles are selected from erythritol, maltitol, xylitol, mannitol, isomalt, lactitol, glycerol and combinations thereof, and a gum region surrounding the center-fill composition, the gum region including a gum base.

Some embodiments provide a chewing gum composition including: a center-fill composition containing a fluid carrier and erythritol particles suspended in the fluid carrier; and a gum region surrounding the center-fill composition, the gum region including a gum base.

Some embodiments provide a confectionery composition including: a center-fill composition including a fluid carrier and erythritol particles suspended in the fluid carrier; and a confectionery region surrounding the center-fill composition, the confectionery region including a confectionery carrier.

Some embodiments provide a chewing gum composition including: a center-fill composition containing a slurry of a fluid carrier, erythritol particles, a flavor agent and a cooling agent, the fluid carrier including glycerin and a hydrogenated starch hydrolysate; and a gum region surrounding the center-fill composition, the gum region including a gum base.

Some embodiments provide a center-filled pellet gum piece including: a center-fill composition including a fluid carrier selected from glycerin, hydrogenated starch hydrolysate, and combinations thereof and saccharide particles selected from erythritol particles, xylitol particles and combinations thereof suspended in the fluid carriers; a gum region surrounding the center-fill composition, the gum region including a gum base; and a coating surrounding at least a portion of the gum region.

Some embodiments provide a center-filled pellet gum piece including: a center-fill composition including a fluid carrier selected from glycerin, hydrogenated starch hydrolysate and combinations thereof and erythritol particles suspended in the fluid carrier; and a gum region surrounding the center-fill composition, the gum region including a gum base; and a coating surrounding at least a portion of the gum region.

Some embodiments provide a center-filled pellet gum piece including: a center-fill composition including a slurry including a fluid carrier selected from glycerin, hydrogenated starch hydrolysate and combinations thereof; saccharide particles selected from erythritol particles, xylitol particles and combinations thereof; at least one flavor agent; and at least one cooling agent; and a gum region surrounding the center-fill composition, the gum region including a gum base; and a coating surrounding at least a portion of the gum region.

In some embodiments, there is a method of preparing a center-filled confectionery piece which includes the steps of:
(a) extruding a center-filled rope of a confectionery layer, wherein the rope includes a center-fill composition containing a fluid carrier selected from sugar, glucose, hydrogenated starch hydrolysate and combinations thereof, and particles selected from erythritol particles, xylitol particles and combinations thereof suspended in the fluid carrier and a confectionery region surrounding the center-fill composition;
(b) sizing the rope;
(c) feeding the rope into a forming mechanism;
(d) forming individual pieces of the center-filled rope; and
(e) coating the individual pieces.

In some embodiments, there is a method of providing a modified cooling release profile in the oral cavity of an individual which includes the steps of:
(a) providing a center-filled confectionery including:
   (i) a center-fill composition containing a fluid carrier selected from sugar, glucose, hydrogenated starch hydrolysate and combinations thereof, and particles selected from erythritol particles, xylitol particles and combinations thereof, suspended in the fluid carrier;
   (ii) a confectionery region surrounding the center-fill composition; and
   (iii) a coating surrounding at least a portion of the confectionery region; and
(b) applying the center-filled confectionery into the oral cavity of the individual, thereby releasing the particles therefrom to impart a modified cooling release profile in the oral cavity.

In some embodiments, there is a method of preparing a multi-layer center-fill chewing gum composition, which includes the steps of:
(a) extruding a center-filled rope of a gum layer, where the rope includes a center-fill composition containing a fluid carrier and polyol particles suspended in the fluid carrier and a gum region surrounding the center-fill composition, the gum region containing a gum base;
(b) sizing the rope;
(c) feeding the rope into a tablet-forming mechanism;
(d) cooling the rope; and
(e) forming individual pieces of the center-filled rope.

In some embodiments, there is provided a method of enhancing the cooling perception of an individual, which includes the steps of:
(a) providing a chewing gum composition including:
   (i) a center-fill composition containing a fluid carrier and polyol particles suspended in the fluid carrier; and
   (ii) a gum region surrounding the center-fill composition, the gum region containing a gum base; and
(b) applying the chewing gum composition into the oral cavity of the individual, thereby releasing the polyol particles therefrom to enhance the perception of cooling in the oral cavity.

In some embodiments, there is provided a method of preparing a center-filled pellet gum piece including the steps of: (a) extruding a center-filled rope of a gum layer, where the rope includes a center-fill composition including a fluid carrier selected from glycerin, hydrogentated starch hydrolysate and combinations thereof; and saccharide particles selected from erythritol particles, xylitol particles and combinations thereof suspended in the fluid carrier and a gum region surrounding the center-fill composition, the gum region including a gum base; (b) sizing said rope; (c) feeding the rope into a tablet-forming mechanism; (d) forming individual pieces of the center-filled rope; and (e) coating the individual pieces with a hard coating.

In some embodiments, there is provided a method of providing a modified cooling release profile in the oral cavity of an individual including the steps of: (a) providing a center-filled pellet gum piece including: (i) a center-fill composition including a fluid carrier comprising glycerin and hydrogenated starch hydrolysate, and saccharide particles selected from erythritol particles, xylitol particles and combinations thereof, suspended in the fluid carrier; wherein the glycerin provides a delayed cooling release and the hydrogenated starch hydrolysate provides an immediate cooling release; (ii) a gum region surrounding the center-fill composition, the gum region including a gum base; and (iii) a coating surrounding at least a portion of the gum region; and (b) applying the center-filled pellet gum piece into the oral cavity of the individual, thereby releasing the saccharide particles therefrom to impart a modified cooling release profile in the oral cavity.

### DETAILED DESCRIPTION

In some embodiments there is a chewing gum or confectionery composition which includes a center-fill composition and a gum or confectionery region which surrounds the center-fill. The center-fill composition includes a fluid carrier and saccharide, particularly polyol, particles suspended therein. The saccharide particles impart an enhanced cooling perception as well as a textural perception to the individual upon consumption of the product.

As used herein the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

As used herein, the terms "first region" and "center-fill" are used interchangeably to refer to the innermost region of the compositions. The term "center-fill" does not imply symmetry of a gum or confectionery piece, only that the "center-fill" is within another region of the gum or confectionery piece. In some embodiments, more than one center-fill may be present.

As used herein, the terms "second region" and "gum region" are used interchangeably to refer to a region of the compositions that may be adjacent to or at least partially surrounding the center-fill, or innermost, region. Similarly, the terms "second region" and "confectionery region" are used interchangeably to refer to a region of the compositions that may be adjacent to or at least partially surrounding the center-fill, or innermost, region.

As used herein, the terms "third region" and "coating" are used interchangeably to refer to the optional outermost region of the compositions.

As used herein, the terms "surround," "surrounding," and the like are not limited to encircling. These terms may refer to enclosing or confining on all sides, encircling or enveloping, and are not limited to symmetrical or identical thicknesses for a region in the gum or confectionery product.

As used herein, the term "liquid" refers to compositions which will readily flow or maintain fluid properties at room temperature and pressure. The term "liquid" may include solutions, suspensions, emulsions, semi-solids, cremes, gels, etc. that may not be completely liquid.

As used herein, the term "fluid carrier" refers to liquids, as defined above, that allow at least a portion of saccharide particles to remain in particulate form when suspended therein. The suspended particles may be in the crystalline form.

As used herein, the term "ingredient" and the term "component" are used interchangeably to describe any additive, fixing, substance, material, agent, active, element, or part that may be included in the gum compositions of some embodiments.

Embodiments described herein provide a multi-component composition which includes at least one center-fill composition, or region, and a gum or confectionery region, which surrounds the center-fill composition. The center-fill composition includes a fluid carrier and saccharide particles suspended therein. For example, in some embodiments the center-fill composition may include powdered or crystalline erythritol suspended in a fluid carrier. The saccharide particles provide a cooling perception upon consumption. The particles also may be of a size that is perceptible to an individual on their tongue, thereby imparting a textural perception during consumption of the product.

In chewing gum embodiments, the gum region includes a gum base, as well as a variety of optional components. In confectionery embodiments, the confectionery region includes a confectionery carrier, as well as a variety of optional components. The individual gum or confectionery piece also may include an outer coating or shell, which can provide a crunchiness to the piece when initially consumed. The individual pieces may form a variety of shapes including pellet, tablet, ball, pillow, chunk, stick and slab, among others.

In some embodiments, the components of the chewing gum or confectionery composition may be in different configurations depending on the desired shape of the total composition. The center-fill area or areas may be in either a concentric configuration with respect to the gum or confectionery region or in a layered configuration. A concentric configuration may be acceptable for a ball, pillow or pellet shape, while a layered configuration may be more suitable for a slab or a stick shape. For example, if the total composition is in a ball shape, a hollow, circular shell may be formed in the innermost region of the piece. The shell may be filled with a center-fill composition, and the other regions or layers of the piece may encircle the center-filled area. However, if the total composition is in a slab shape, a hollow shell formed in the innermost region may be of a rectangular shape. The rectangular-shaped shell may be filled with a center-fill composition, and the other regions or layers of the piece may enclose or confine the rectangular center-filled area on all sides of the rectangle.

In some embodiments, the gum or confectionery region may have a nonuniform thickness. In particular, the gum or confectionery region in layered configuration embodiments may be thinner on the ends than on the sides of the piece.

As mentioned above, the center-fill composition of the gum or confectionery composition includes a fluid carrier. Accordingly, the center-fill composition may be a liquid, semi-solid or the like. Such center-fill compositions may involve concerns regarding retention of the liquid center during manufacturing and shelf-life, as mentioned above. It may be desirable, therefore, to employ gum or confectionery region compositions with liquid-fill products that substantially reduce or prevent leaking of the liquid center. Suitable gum or confectionery region compositions are discussed in detail below.

In some embodiments, the center-fill region may be substantially or completely filled with the liquid or semi-solid center-fill composition. In some other embodiments, the center-fill region may be only partially filled with the liquid or semi-solid center-fill composition.

In some embodiments, the center-fill region may include two or more center-fill compositions. The two or more center-fill compositions may be the same or different forms. For example, some embodiments may contain a mixture of two or more distinct liquids, which may or may not be miscible. Similarly, some embodiments may contain two or more distinct semi-solids in the center-fill region. Mixtures of different center-fill forms also may be included in some embodiments. For example, a liquid and a semi-solid may be included in the center-fill region. The two or more liquids and/or semi-solids employed in the center-fill composition may be included in the same or different amounts and may have similar or distinct characteristics. More specifically, in some embodiments, the two or more center-fill compositions may differ in a variety of characteristics, such as, viscosity, color, flavor, taste, sensation, ingredient components, functional components, sweeteners, or the like.

In some embodiments, the center-fill composition also may include additional non-liquid components, such as, for example, flavor beads, fruit particles, nut particles, flavor particles, gelatin portions, and the like.
The center-fill gum composition and other compositions described herein may be formed by any technique known in the art which includes the method described by U.S. Patent No. 6,280,780 to Degady et al. ("Degady"). Degady describes an apparatus and method for forming center-filled gum pellets. The method includes first extruding a liquid-filled rope of a chewing gum layer and passing the rope through a sizing mechanism including a series of pairs of pulley-shaped roller members. The roller members "size" the rope or strand of gum material such that it leaves the series of rollers with the desired size and shape for entering a tablet-forming mechanism.

The rope is then led into a tablet-forming mechanism including a pair of rotating chain die members which are endless chain mechanisms and both rotate at the same speed by a motor and gear mechanism. Each of the chain mechanisms include a plurality of open curved die groove members which mate and form die cavities in which the pieces of gum material (pellets or tablets) are formed. While Degady is limited to the formation of pellet or tablet shaped pieces, the gum pieces may be of other shapes as described above. The shape of the die groove members may be altered to provide any desired shape.

The gum may optionally be passed through a cooling tunnel either before entering the tablet-forming mechanism, after exiting the tablet-forming mechanism or both. Cooling of the rope prior to entering the tablet-forming mechanism may be beneficial to prevent rebound of the individual pieces and thus may provide an increase in productivity.

The cooled pieces of gum material are then fed into a storage container for conditioning and further processing. At this point, the cooled pieces of gum material could also be fed directly into a coating tunnel mechanism, such as a rotating tunnel mechanism.

Whether the pieces of formed gum material are first stored, transported in a storage container, or fed directly into a coating tunnel or mechanism, the individual pieces of gum material may subsequently be subjected to a conventional sugar or sugarless coating process in order to form a hard exterior shell on the liquid-filled gum material. A variety of coating processes or mechanisms of this type are known. In some embodiments, the coating
is applied in numerous thin layers of material in order to form an appropriate uniform coated and finished quality surface on the gum products. The hard coating material, which may include sugar, maltitol, sorbitol or any other polyol, including those described herein, and optionally flavoring, is sprayed onto the pellets of gum material as they pass through a coating mechanism or a coating tunnel and are tumbled and rotated therein. In addition, conditioned air is circulated or forced into the coating tunnel or mechanism in order to dry each of the successive coating layers on the formed products. In some embodiments, the coating, or outermost region, can be formed by lamination, dual or multiple extrusion, or any other process that creates an outermost region.

The coating composition may range from about 2% to about 80%, more specifically, about 20% to about 40% by weight of an individual gum or confectionery piece which includes a center-fill, a gum or confectionery region and a coating; even more specifically, from 25% to 35% and still more specifically around 30%. The coating may include sugar or polyol such as maltitol as the primary component, but may also include flavors, colors, etc. as described below in the discussion of the gum region. The coating or outermost region may be crystalline or amorphous.

The center-filled products, which may be formed as described above, may be administered into the oral cavity of an individual to impart an enhanced cooling perception therein. In particular, a center-fill chewing gum or confectionery product described herein is provided and applied into the oral cavity. As the product is consumed, the saccharide particles are released therefrom. The release of the saccharide particles enhances the perception of cooling in the oral cavity, as well as providing a textural perception therein.

In some embodiments, the center-filled chewing gum or confectionery product provides resistance from moisture migration from the center-fill to the gum or confectionery region by modifying both the saccharide or polyol composition and gum base or confectionery composition present in the gum or confectionery region. This is particularly relevant for liquid-fill chewing gum embodiments. This is in contrast to the aforementioned conventional approaches and which have not fully addressed the problems associated with manufacturing and shelf-stability of liquid center-filled products.

In some embodiments of the invention, there are included smaller piece-sizes. For example, the smallest conventional piece sizes of commercially available gum are generally in pellet forms. These piece-sizes currently range from about 5-7 grams. In some embodiments liquid filled products have been made using substantially smaller piece sizes, i.e., 50-60% smaller by weight, without loss of liquidity or migration of liquid into the gum region or beyond into the coating. Some inventive embodiments provide a liquid-filled gum piece size range which is greater than about 0.5 grams, more specifically greater than 1.5 grams up to about 3 grams, including the addition of an outer hard coating shell. In addition, in some embodiments a gum piece may include a center-fill, a gum region including a gum base and an outer coating. Such gum pieces may be about 2.2 grams total weight per piece.

It has been discovered that pieces of such small size and particularly with gum shapes or configurations having proportionally more liquid-fill surface area as compared to the weight of the liquid per se, have a greater tendency to lose the liquidity of the center due to the interaction of different factors. While not limited to a single theory, these factors include the small amount of liquid-fill in comparison to the surface of the gum region in which the liquid-fill is in direct contact, the interaction of the type of elastomer with the center-fill (i.e. SBR versus non-SBR), the compatibility of the gum region components with the liquid-fill components, and the potential capillary action of the polyol used in the gum region. For example, the structure of sorbitol, which is customarily used in gum formulations in the United States, does not provide a tightly packed crystalline structure, giving almost a sponge-like appearance. Therefore, in order to provide a center-filled gum piece of less than about 3 grams, the present invention alters the gum and gum base in some embodiments to include a polyol composition having a dense, tightly packed crystalline structure which is unlike the sponge-like structure in conventional sorbitol gum region formulations, in order to provide a center-filled gum piece which resists loss of liquidity.

For other useful center-fill gum compositions and/or components for use therein, see the following co-pending commonly owned patent applications: U.S. Application No. 60/776,748, filed on February 24, 2006, entitled "Liquid-Filled Chewing Gum Composition"; U.S. Application No. 60/776,642, filed on February 24, 2006, entitled "Liquid-Filled Chewing
Gum Composition"; U.S. Application No. 60/776,641 (Attorney Docket No. 1421-5 CIP IV/P), filed on February 24, 2006, entitled "Liquid-Filled Chewing Gum Composition "; U.S. Application No. 60/776,508 (Attorney Docket No. 1421-137P), filed on February 24, 2006, entitled "Center-Filled Chewing Gum with Barrier Layer"; U.S. Application No. 60/776,382 (Attorney Docket No. 1421-138P), filed on February 24, 2006, entitled "Center-Filled Chewing Gum Composition"; and U.S. Application No. 60/776,699 (Attorney Docket No. 1421-139P), filed on February 24, 2006, entitled "Multi-Modality Chewing Gum Composition".

### Gum Region

In chewing gum embodiments, the gum region surrounds the center-fill composition. The gum region, also referred to as the second region in center-fill chewing gum embodiments, may include one or more cavities therein to house the center-fill. The shape of the cavity will be largely dictated by the final configuration of the chewing gum piece.

In some embodiments, the gum region may provide a liquid barrier to surround and prevent the liquid-fill from migration and premature release. By selection of the ratio of the desired cavity surface area to the liquid-fill weight, optimization of the reduction in potential liquid-fill migration in to the gum region area can be achieved. This is particularly useful when the gum piece size is desired to be substantially smaller than conventional commercialized gum pieces. In particular, liquid-filled pellet gums having sizes of 2 to 3 grams by weight of the entire gum piece have been successfully made. However, smaller gum pieces, as small as about 0.5 grams are contemplated.

As discussed earlier, some embodiments, particularly liquid-fill embodiments, may incorporate a modified polyol composition including at least one polyol incorporated into the gum region as discussed herein. Moreover, the selection of a non-SBR gum base in the gum region, in combination with the modified polyol composition has been found to be particularly useful in achieving stable liquid-filled chewing gum compositions.

The gum region may include a gum base. The gum base may include any component known in the chewing gum art. For example, the gum region may include elastomers, bulking agents, waxes, elastomer solvents, emulsifiers, plasticizers, fillers and mixtures thereof. Wherein the gum region is included in a three component composition including a center-fill, a gum region and a coating layer, the gum region may comprise from about 40% to about 97%, more specifically from about 55% to about 65% by weight of the chewing gum piece, even more specifically about 62%.

The amount of the gum base which is present in the gum region may also vary. In some embodiments, the gum base may be included in the gum region in an amount from about 25% to about 45% by weight of the gum region. A more specific range of gum base in some embodiments may be from about 28% to about 42% by weight of the gum region. Even more specifically, the range may be from about 28% to about 35% or from about 28% to about 30% in some embodiments. Alternatively, in some high gum base embodiments, the gum base may be present in an amount from about 45% to about 100% by weight of the gum region.

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof.

Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from about 10% to about 60% by weight of the gum region, desirably from about 35% to about 40% by weight.

In some embodiments, the gum base may include wax. It softens the polymeric elastomer mixture and improves the elasticity of the gum base. When present, the waxes employed will have a melting point below about 60°C., and preferably between about 45°C. and about 55°C. The low melting wax may be a paraffin wax. The wax may be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnuba wax, most petroleum waxes, and the like, and mixtures thereof.

In addition to the components set out above, the gum base may include a variety of other ingredients, such as components selected from elastomer solvents, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in amounts from about 2% to about 15%, and more specifically, from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20% by weight of the gum base, and more specifically in amounts from about 9% to about 17%, by weight of the gum base.

Plasticizers also include are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In some embodiments, the gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. The amount of filler, may be present in an amount from about zero to about 40%, and more specifically from about zero to about 30%, by weight of the gum base. In some embodiments, the amount of filler will be from about zero to about 15%, more specifically from about 3% to about 11%.

A variety of traditional ingredients may be optionally included in the gum base in effective amounts such as coloring agents, antioxidants, preservatives, flavoring agents, high intensity sweeteners, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base. A variety of components which may be added to the gum region, or alternatively to the liquid-fill region or coating are described in greater detail in the section entitled "Additional Components" hereinbelow.

Some embodiments extend to methods of making the center-fill gum compositions. The manner in which the gum base components are mixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. The remaining ingredients, such as the low melting point wax, are then admixed, either in bulk or incrementally, while the gum base mixture is blended again for 1 to 30 minutes.

The gum composition may include amounts of conventional additives selected from the group consisting of sweetening agents (sweeteners), plasticizers, softeners, emulsifiers, waxes, fillers, bulking agents (carriers, extenders, bulk sweeteners), mineral adjuvants, flavoring agents (flavors, flavorings), coloring agents (colorants, colorings), antioxidants, acidulants, thickeners, medicaments, and the like, and mixtures thereof. Some of these additives may serve more than one purpose. For example, in sugarless gum compositions, a sweetener, such as maltitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and mixtures thereof, and fillers, such as those discussed above under the category of mineral adjuvants.

In some embodiments, the gum region may also contain a bulking agent. Suitable bulking agents may be water-soluble and include sweetening agents selected from, but not limited to, monosaccharides, disaccharides, polysaccharides, sugar alcohols, and mixtures thereof; randomly bonded glucose polymers such as those polymers distributed under the tradename Litesse™ which is the brand name for polydextrose and is manufactured by Danisco Sweeteners, Ltd. of 41-51 Brighton Road, Redhill, Surryey, RH1 6YS, United Kingdom.; isomalt (a racemic mixture of alpha-D-glucopyranosyl-1,6-mannitol and alpha-D-glucopyranosyl-1,6-sorbitol manufactured under the tradename PALATINIT by Palatinit Sussungsmittel GmbH of Gotlieb-Daimler-Strause 12 a, 68165 Mannheim, Germany); maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugar bulking agents include monosaccharides, disaccharides and polysaccharides such as xylose, ribulose, glucose (dextrose), lactose, mannose, galactose, fructose (levulose), sucrose (sugar), maltose, invert sugar, partially hydrolyzed starch and corn syrup solids, and mixtures thereof.

Suitable sugar alcohol bulking agents include sorbitol, xylitol, mannitol, galactitol, lactitol, maltitol, erythritol, isomalt and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

The sweetening agents which may be included in the compositions of some embodiments may be any of a variety of sweeteners known in the art. These are described in more detail in the "Additional Components" section herein below and may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

Desirably, the sweetener is a high intensity sweetener such as aspartame, neotame, sucralose, and acesulfame potassium (Ace-K).

In general, an effective amount of sweetener may be utilized to provide the level of sweetness desired, and this amount may vary with the sweetener selected. In some embodiments the amount of sweetener may be present in amounts from about 0.001% to about 3%, by weight of the gum composition, depending upon the sweetener or combination of sweeteners used. The exact range of amounts for each type of sweetener may be selected by those skilled in the art.

In some embodiments, particularly some liquid-fill embodiments, the gum region may include a specific polyol composition including at least one polyol which is from about 30% to about 80% by weight of said gum region, and specifically from 50% to about 60%. In some liquid-fill embodiments, such gum region compositions may substantially reduce or prevent leaking of the liquid center. The polyol composition may include any polyol known in the art including, but not limited to maltitol, sorbitol, erythritol, xylitol, mannitol, isomalt, lactitol and combinations thereof. Lycasin™ which is a hydrogenated starch hydrolysate including sorbitol and maltitol, may also be used.

The amount of the polyol composition or combination of polyols used in the gum region will depend on many factors including the type of elastomers used in the gum base and the particular polyols used. For example, wherein the total amount of the polyol composition is in the range of about 40% to about 65% based on the weight of the gum region, the amount of maltitol may be from about 40% to about 60% in addition to an amount of sorbitol from about 0 up to about 10%, more specifically, an amount of maltitol may be from about 45% to about 55% in combination with sorbitol from about 5% to about 10% based on the weight of the gum region.

Maltitol is a sweet, water-soluble sugar alcohol useful as a bulking agent in the preparation of beverages and foodstuffs and is more fully described in U.S. Pat. No. 3,708,396, which disclosure is incorporated herein by reference. Maltitol is made by hydrogenation of maltose which is the most common reducing disaccharide and is found in starch and other natural products.

The polyol composition which may include one or more different polyols which may be derived from a genetically modified organism ("GMO") or GMO free source. For example, the maltitol may be GMO free maltitol or provided by a hydrogenated starch hydrolysate. For the purposes of this invention, the term "GMO-free" refers to a composition that has been derived from process in which genetically modified organisms are not utilized.

Some embodiments may include a polyol composition including maltitol which has a greater crystalline density than sorbitol. Other polyols which exhibit a greater crystalline density than sorbitol include xylitol and mannitol. The greater the crystalline density of the polyol the better the barrier properties are. Specifically, a polyol of a greater crystalline density results in a structure with fewer pores, which provides less surface area for potential moisture or fluid migration into the gum region from the liquid-fill.

Since sugar (sucrose) is generally accepted as the baseline for comparison of sweeteners, including polyols, the polyol composition of some embodiments is described similarly. For example, the polyol composition of may have a sweetness of greater than about 50% of the sweetness of sucrose. More specifically, the polyol composition of the present invention may have sweetness greater than about 70% the sweetness of sucrose.

The polyol composition of some embodiments may also be described in terms of the solubility of the composition. The solubility of the polyol composition will depend on the solubility of the one or more polyols included in the composition. For example, if maltitol is the only polyol included in the polyol composition, the solubility of the polyol composition in water will be about 60% at 25°C.

Blends of different polyols may also be used in some embodiments. Polyols for use in the invention are erythritol, lactitol, xylitol, mannitol, maltitol, isomalt, and combinations thereof. Where a blend of more than one polyol is used, the solubility of the polyol composition will depend on a weighted ratio of the amount of the polyol in the blend and the solubility of each individual polyol which is included. For example, a combination of two or more polyols may have a water solubility range of about 60% to about 72%, if it includes maltitol, which has a water solubility of 60% at 25°C, and sorbitol, which has a water solubility of about 72% at 25°C. Other suitable solubility ranges, which depend on the included two or more polyols include the ranges from about 40% to about 60% at 25°C and 55% to 65% at 25°C. The range of the solubility may vary, depending on the particular polyols used. Alternative suitable solubilities of a polyol combination include those having a solubility less than sucrose (i.e., less than 67%).

In some embodiments, the polyol composition may include particles of a variety of sizes. Specifically, the average particle size of the polyol composition ranges from
about 30 microns to about 600 microns, more specifically from about 30 microns to about 200 microns.

Coloring agents may be used in amounts effective to produce the desired color. The coloring agents may include pigments which may be incorporated in amounts up to about 6%, by weight of the gum composition. For example, titanium dioxide may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884. Additional coloring components are described in the "Additional Components" section hereinbelow.

Suitable oils and fats usable in gum compositions include partially hydrogenated vegetable or animal fats, such as coconut oil, palm kernel oil, beef tallow, and lard, among others. These ingredients when used are generally present in amounts up to about 7%, and preferably up to about 3.5%, by weight of the gum composition.

Some embodiments may include a method for preparing the improved chewing gum compositions for the gum region, including both chewing gum and bubble gum compositions. The chewing gum compositions may be prepared using standard techniques and equipment known to those skilled in the art. The apparatus useful in accordance with some embodiments comprises mixing and heating apparatus well known in the chewing gum manufacturing arts, and therefore the selection of the specific apparatus will be apparent to the artisan.

With respect to the center-fill layer, the gum region may have a water activity greater than or equal to the water activity of the center-fill composition. However, in compositions wherein a greater water activity is desired in the center or liquid-fill, the water activity of the center-fill composition may be greater than that of the gum region. A higher moisture content will aid in hydration of thickeners like xanthan gum and cellulose when present in the center-fill.

The gum region may have a total moisture content of about 14% by weight of the gum region and more specifically may have a total moisture content from about 9% to about 14% by weight, with a free moisture content of less than about 5%. The center-fill further may have total moisture content including free and bound moisture from about zero up to about 35% by weight of said center-fill, specifically about 22%.

### Confectionery region

In confectionery embodiments, the confectionery region surrounds the center-fill composition. The confectionery region, also referred to as the second region in center-fill confectionery embodiments, may include one or more cavities therein to house the center-fill. The shape of the cavity will be largely dictated by the final configuration of the confectionery product.

The confectionery region includes a confectionery carrier. The carrier in confectionery compositions may include bulk sweeteners such as sugars and sugarless bulk sweeteners, or the like, or mixtures thereof. Bulk sweeteners generally are present in amounts of about 0.05% to about 99% by weight of the composition.

Suitable sugar sweeteners for use in the confectionery compositions generally include mono-saccharides, di-saccharides and poly-saccharides such as but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids and mixtures thereof.

Suitable sugarless sweetening agents for use in the confectionery compositions include sugar alcohols (or polyols) such as, but not limited to, sorbitol, xylitol, mannitol, galactitol, maltitol, hydrogenated isomaltulose (isomalt), lactitol, erythritol, hydrogenated starch hydrolysate, stevia and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

In some embodiments, high-intensity sweeteners also may be included in the confectionery compositions. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine; L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumatococcus danielli (Thaumatin I and II) and talin;
(f) the sweetener monatin (2-hydroxy-2-(indol-3-ylmethyl)-4-aminoglutaric acid) and its derivatives; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In general, an effective amount of intense sweetener may be utilized to provide the level of sweetness desired, and this amount may vary with the sweetener selected. The intense sweetener may be present in amounts from about 0.001% to about 3%, by weight of the comestible, depending upon the sweetener or combination of sweeteners used. The exact range of amounts for each type of sweetener may be selected by those skilled in the art.

A variety of traditional ingredients also may be included in the confectioneries in effective amounts such as coloring agents, antioxidants, preservatives, and the like. Coloring agents may be used in amounts effective to produce the desired color. The coloring agents may include pigments which may be incorporated in amounts up to about 6%, by weight of the composition. For example, titanium dioxide may be incorporated in amounts up to about 2%, and preferably less than about 1%, by weight of the composition. The colorants may also include natural food colors and dyes suitable for food, drug and cosmetic applications. These colorants are known as F.D. & C. dyes and lakes. The materials acceptable for the foregoing uses are preferably water-soluble. Illustrative nonlimiting examples include the indigoid dye known as F.D. & C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl-N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

Lubricants also may be added in some embodiments to improve the smoothness of the confectionery product, such as, for example hard candy embodiments. Suitable lubricants include, but are not limited to, fats, oils, aloe vera, pectin and combinations thereof.

Other conventional additives known to one having ordinary skill in the art also may be used in the confectionery compositions.

Some embodiments are directed to methods of preparing confectionery compositions. Such confections may be prepared using conventional apparatus such as fire cookers, cooking extruders, and/or vacuum cookers.

In accordance with some embodiments, the confectionery carrier, e.g., bulk sweeteners, as well as a solvent (e.g., water), are combined in a mixing vessel to form a slurry. The slurry is heated to about 70°C to 120°C to dissolve any sweetener crystals or
particles and form an aqueous solution. Once dissolved, heat at temperatures of about 135°C to 160°C and vacuum are applied to cook the batch and boil off water until a residual moisture of less than about 4% is achieved. The batch changes from a crystalline to an amorphous phase. The optional flavor agents, cooling agents and the like are then admixed in the batch by mechanical mixing operations, along with any other optional additives, such as coloring agents.

The optimum mixing required to uniformly mix the sweeteners, flavors, cooling agents, colorants and other additives during manufacturing of a confectionery is determined by the time needed to obtain a uniform distribution of the materials. Normally, mixing times of from four to ten minutes have been found to be acceptable.

In some embodiments, the batch is then cooled to about 100°C to 20°C to attain a semi-solid or plastic-like consistency. Once the candy mass has been properly tempered, it may be cut into workable portions or formed into desired shapes having the correct weight and dimensions. A variety of forming techniques may be utilized depending upon the shape and size of the final product desired. Once the desired shapes are formed, cool air is applied to allow the comestibles to set uniformly, after which they may be incorporated into a center-filled product, wrapped and packaged.

In other embodiments, the mixed batch is deposited into molds of any desired shape and size. Cool air then may be applied to allow the molded comestibles to set uniformly, after which the comestibles may be removed, incorporated into a center-filled product, wrapped and packaged.

The apparatus useful in accordance with some embodiments comprises cooking and mixing apparatus well known in the confectionery manufacturing arts, and selection of the specific apparatus will be apparent to one skilled in the art.

### Center-fill composition

The center-fill composition, or region, is located adjacent to or within the gum region or confectionery region, described above. The center-fill, also referred to as the interior portion, of the chewing gum or confectionery composition can take the physical form of a liquid or a semi-solid. More specifically, the center-fill composition includes a fluid carrier in which a plurality of saccharide, particularly polyol, particles are suspended. Accordingly, the fluid carrier can be a liquid or semi-solid. In some embodiments, the center-fill composition may include a slurry of the fluid carrier and saccharide particles.

The fluid carrier may include any liquid or semi-solid that allows at least a portion of the saccharide particles to remain in particulate form when suspended therein. The saccharide particles desirably will not completely dissolve in the fluid carrier. Accordingly, the saccharide particles may be perceived by the individual upon consumption of the chewing gum or confectionery composition, thereby providing enhanced cooling and/or textural perception within the oral cavity of the individual.

Examples of suitable fluid carriers include, but are not limited to, glycerin, hydrogentated starch hydrolysates, corn syrups, sorbitol syrups, dextrose syrups, sugar syrups, maltitol syrups, propylene glycol, hydrocolloids, polyglycitol syrups and combinations thereof. In some embodiments, the fluid carrier may include a combination of glycerin and a hydrogenate starch hydrolysate.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

In general, the fluid carrier is present in the chewing gum or confectionery composition in amounts of about 8% to about 11% by weight of the total composition, more specifically about 8.6% to about 10.5% by weight of the total composition, and even more specifically about 9% to about 10% by weight of the total composition. In some embodiments, the fluid carrier is present in the center-fill composition in amounts of about 10% to about 65% by weight of the center-fill composition.

The saccharide particles are suspended within the fluid carrier in the center-fill composition. As mentioned above, the saccharide particles may be in a slurry with the fluid carrier. In some embodiments, the saccharide particles may be powdered or crystalline. Upon consumption, the saccharide particles impart an enhanced cooling perception in the oral cavity of the individual. In particular, in some embodiments, saccharides having a high negative heat of solution may be employed. Heat of solution is a thermodynamic concept, referring to the amount of heat evolved or absorbed when one mole of solute is dissolved in a solvent. If a lot of energy is needed to dissolve the substance, the heat of solution is negative. In such cases, an endothermic cooling effect is perceived. In accordance therewith, the saccharides used in some embodiments may have a heat of solution of less than about -8.37 J/g (-2 cal/g), more specifically less than about -41.87 J/g (-10 cal/g), and even more specifically less than abou -104.67 J/g (-25 cal/g). In some embodiments, the heat of solution of the saccharide particles may be about -180.03 J/g (-43 cal/g).

Suitable saccarides include, erythritol, maltitol, xylitol, mannitol, isomalt, lactitol, glycerol and combinations thereof. For instance, some embodiments include erythritol particles. Erythritol has a high negative heat of solution, i.e., about -180.3 J/g (-43 cal/g), and thus, provides a strong cooling effect upon consumption. Sorbitol, which does not form a part of the invention, and xylitol, which have heats of solution of -108,56 J/g (-26 cal/g) and -152.82 J/g (-36.5 cal/g) respectively, also may be desirable. Combinations of various saccharides, such as erythritol, and xylitol particles, also may be employed.

In some embodiments, it may be desirable to employ saccharide particles in combination with another saccharide that is not in particulate form. For instance, erythritol powder may be suspended in the fluid carrier and another non-particulate polyol also may be included in the center-fill composition.

In addition to providing cooling, the saccharide particles also may provide a textural perception within the oral cavity. In particular, the particles may be of a size that can be perceived on the tongue of the individual, thus providing a slightly gritty feeling. In some embodiments, for instance, the saccharide particles may have a particle size of less than about 45 micrometers.

In general, the saccharide particles are present in the chewing gum or confectionery composition in amounts of about 3% to about 7% by weight of the total composition, more specifically about 4.3% to about 5.2% by weight of the total composition, and even more specifically about 4.5% to about 4.9% by weight of the total composition. According to the invention, the saccharide particles are present in the center-fill composition in amounts of about 5% to about 80% by weight of the center-fill composition.

The center-fill composition also may include at least one flavor agent and/or at least one cooling agent. Examples of suitable flavor agents and cooling agents are provided herein in the section entitled "Additional Components". In some embodiments, a pre-mix of a flavor agent and a cooling agent may be included. The flavor agent may be a liquid, such as a flavor oil, in which the cooling agent may be dissolved. For example, menthol crystals may be dissolved in a flavor oil. The pre-mix may be added to the fluid carrier in the center-fill composition in addition to the saccharide particles, and also suspended therein. For instance, in some embodiments, the center-fill composition includes a slurry of the fluid carrier, saccharide particles, flavor and cooling agent. Upon consumption, the cooling agent may further enhance the cooling effect of the chewing gum or confectionery composition.

In some embodiments described herein, the liquid centers may present viscosity differences that can be manipulated for a desired effect. In some embodiments, liquid centers can be formulated to have low viscosities that consumers perceive as refreshing. In some embodiments, the viscosity of the liquid center can be manipulated for a variety of reasons including, but not limited to, processing efficiency or creation of a desired perception. In some embodiments, the viscosity of the liquid center can be 3,000 to 10,000 pascal seconds. In some embodiments, the viscosity of the liquid center can be 4,000 to 6,5000 pascal seconds.

In some embodiments, the water activity of the liquid center can be manipulated for a variety of reasons including, but not limited to, microbial stability or maintenance of a desired texture. In some embodiments, the water activity of the liquid center can be 0.1 to 0.7. In some embodiments, the water activity of the liquid center can be 0.25 to 0.35.

Liquids that can be included in the liquid center in some embodiments can include, but are not limited to, fruit juice; vegetable juice; fruit puree; fruit pulp; vegetable pulp; vegetable puree; fruit sauce; vegetable sauce; honey; maple syrup; molasses; corn syrup; sugar syrup; polyol syrup; hydrogenated starch hydrolysates syrup; emulsions; vegetable oil; glycerin; propylene glycol; ethanol; liqueurs; chocolate syrup, dairy-based liquids such as milk, cream, etc.; and combinations thereof.

The center-fill compositions also may include any components known in the art for incorporation with a center-fill composition. In some embodiments, particularly liquid-fill embodiments, for instance, this may include glycerine in addition to one or more other polyols in amounts greater than zero up to about 20%, more specifically, up to about 10% by weight of the total chewing gum composition, i.e., including a center-fill composition, a gum region and a coating. In some embodiments, the center-fill is approximately 8% by weight of the total chewing gum composition. In some embodiments, the other polyol component includes desirably maltitol, sorbitol, xylitol, or a combination thereof.

In some embodiments, the centers may contain those traditional ingredients well known in the chewing gum and confectionery arts, such as flavoring agents, sweetening agents, and the like, and mixtures thereof, as described above. In addition to confectionery additives, the centers may also contain pharmaceutical additives such as medicaments, breath fresheners, vitamins, minerals, caffeine, fruit juices, and the like, and mixtures thereof. The confectionery and pharmaceutical agents may be used in many distinct physical forms well known in the art to provide an initial burst of sweetness and flavor and/or therapeutic activity or a prolonged sensation of sweetness and flavor and/or therapeutic activity. Without being limited thereto, such physical forms include free forms, such as spray dried, powdered, and beaded forms, and encapsulated forms, and mixtures thereof. Illustrative, but not limiting, examples of liquid centers suitable for use in some embodiments include those centers disclosed in U.S. Pat. Nos. 3,894,154, 4,156,740, 4,157,402, 4,316,915, and 4,466,983. Specific examples of suitable additional components include taurine, guarana, vitamins, Actizol™, chlorophyll, Recaldent™ tooth remineralization technology, and Retsyn™ .breath freshening technology.

In some embodiments, the center-fill composition also may include a natural or synthetic gum such as carboxymethylcellulose, pectin, propylene glycol aginate, agar and gum tragacanth. These compositions serve to increase viscosity by reducing the amount of free water in the composition. The viscosity of the center-fill may range from about 300 cp to about 6,000 cp at 25°C. In liquid-fill compositions which have a greater water activity than the surrounding gum region, the viscosity may range from about 3,000 cp to about 6,000 cp at 25°C.

Xanthan gum may also be used to increase the viscosity of the center-fill composition. In some liquid-fill embodiments, increasing viscosity of the liquid also helps prevent the liquid from leaking through the gum piece. Xanthan gum is available under the tradename Keltrol® from Signet Chemical Corporation.

Some embodiments extend to methods of making the center-filled compositions. The compositions may be prepared using standard techniques and equipment known to those skilled in the art. The apparatus useful in accordance with the embodiments described herein comprises mixing and heating apparatus well known in the chewing gum manufacturing arts, and therefore the selection of the specific apparatus will be apparent to the artisan. Such methods and apparatus are disclosed, for example, in U.S. Pat. Nos. 3,806,290 and 3,857,963.

### Coating composition

The coating composition, when included in the center-fill compositions, may be applied by any method known in the art including the method described above. The coating may surround at least a portion of the gum or confectionery region. The coating composition may be present in an amount from about 2% to about 60%, more specifically from about 25% to about 35% by weight of the total center-filled gum or confectionery piece, even more specifically about 30% by weight of the piece.

The outer coating may be hard, crunchy, or soft. Typically, the outer coating may include sorbitol, maltitol, xylitol, erythritol, isomalt, and other crystallizable polyols; sucrose may also be used. Furthermore the coating may include several opaque layers, such that the chewing gum or confectionery composition is riot visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles. If the composition comprises a coating, it is possible that one or more oral care actives can be dispersed throughout the coating. This is especially preferred if one or more oral care actives is incompatible in a single phase composition with another of the actives. Flavors may also be added to yield unique product characteristics.

In some embodiments, the coating may also be formulated to assist with increasing the thermal stability of the gum or confectionery piece and preventing leaking of the liquid fill. In some embodiments, the coating may include a gelatin composition. The gelatin composition may be added as a 40% by weight solution and may be present in the coating composition from about 5% to about 10% by weight of the coating composition, and more specifically about 7% to about 8%. The gel strength of the gelatin may be from about 130 bloom to about 250 bloom.

Other materials may be added to the coating to achieve desired properties. These materials may include without limitation, cellulosics such as carboxymethyl cellulose, gelatin, pullulan, alginate, starch, carrageenan, xanthan gum, gum arabic and polyvinyl acetate (PVA).

The coating composition may also include a pre- coating which is added to the individual gum pieces prior to an optional hard coating. The pre-coating may include an application of polyvinyl acetate (PVA). This may be applied as a solution of PVA in a solvent, such as ethyl alcohol. When an outer hard coating is desired, the PVA application may be approximately 3% to 4% by weight of the total coating or about 1% of the total weight of the gum or confectionery piece (including a center-fill, gum or confectionery region and hard coating).

Various other coating compositions and methods of making are also contemplated including but not limited to soft panning, dual or multiple extrusion, lamination, etc. Thus, in some embodiments, the coating can be amorphous or crystalline and the resulting texture can be hard, crunchy, crispy, soft, or chewy.

### Center-filled pellet gum

More specifically, some embodiments are directed to center-filled pellet gum pieces. In center-filled pellet gum piece embodiments, the piece may include a center-fill composition and a gum region. In some embodiments the center-filled pellet gum piece also may include a coating surrounding at least a portion of the gum region. Suitable coatings and gum regions may include any of those as described above.

The center-fill composition of the center-filled pellet gum piece may include a fluid carrier selected from glycerin, hydrogenated starch hydrolysate, and combinations thereof. Glycerin may be present in amounts of about 1.0% to about 30.0% by weight of the center-fill composition, specifically about 1.5% to about 20.0% by weight of the center-fill composition. Suitable hydrogenated starch hydrolysates include any of those as described above and may be present in amounts of about 20% to about 50% by weight of the center-fill composition, specifically about 35% to about 45% by weight of the center-fill composition. Glycerin and hydrogenated starch hydrolysate may be used alone or in combination to tailor the viscosity. Hydrogenated starch hydrolysates may provide a center-fill composition that is highly viscous, whereas glycerin provides lower viscosity center-fill compositions. A combination of glycerin and hydrogenated starch hydrolysate may provide a range of high, low and intermediate viscosity ranges.

The center-fill composition also may include saccharide particles suspended in the fluid carrier. Suitable saccharide particles may include erythritol particles, xylitol particles and combinations thereof. Suitable erythritol particles may include any of those as described above and may be present in amounts of about 10% to about 50% by weight of the center-fill composition, more desirably an amount of about 20% to about 30% by weight of the center-fill composition. Xylitol particles may be present in amounts of about 0% to about 50% by weight of the center-fill composition, more desirably an amount of about 15% to about 30% by weight of the center-fill composition.

As discussed above, the saccharide particles may be in a slurry with the fluid carrier. The slurry also may include at least one flavor agent and at least one cooling agent. Examples of suitable saccharide particles may include any of the erythritol and/or xylitol particles as described above. Examples of suitable fluid carriers may include any of the glycerin and/or hydrogenated starch hydrolysates as described above. Examples of suitable flavor agents and cooling agents also may include any of those as described above.

In some embodiments, the solids content of the slurry may be higher than conventional center-fill compositions. For instance, the center-fill composition may have a solids content of about 91%, whereas solids levels typically are about 80-82%. Even though such embodiments provide less liquid sensation, they still impart a cooling effect due to the erythritol and/or xylitol particles suspended therein.

Some embodiments extend to methods of making center-filled pellet gum pieces. The compositions may be prepared using standard techniques and equipment known to those skilled in the art, as discussed above.

Some embodiments extend to methods of providing a modified cooling release profile in the oral cavity of an individual. For instance, in some embodiments in which erythritol and/or xylitol particles are suspended in glycerin, the glycerin provides a delayed release of the erythritol and/or xylitol particles, and thus, a delayed cooling perception in the oral cavity. In some embodiments in which erythritol and/or xylitol particles are suspended in a hydrogenated starch hydrolysate, such as LYCASIN, the hydrogenated starch hydrolysate provides an immediate release of the erythritol and/or xylitol particles, and thus, a comparatively more immediate cooling perception in the oral cavity as compared to those suspended in glycerin. Some embodiments may include a combination of glycerin and hydrogenated starch hydrolysate, thereby allowing a portion of the erythritol and/or xylitol particles to release immediately and a portion to have a delayed release. As such, the onset of the cooling perception may be immediate, but the cooling perception also may extend over a period of time.

Although some embodiments of the center-filled chewing gum are directed towards fluid migration prevention, certain embodiments of center-filled pellet gum pieces may include center-fill compositions which are diffused into the gum region. However, diffusion of the center-fill composition into the gum region does not decrease the effect of the modified cooling release profile in an individual. The sensation of cooling remains the same even though the center-fill composition may be absorbed by the gum region.

### Additional Components

Additional additives, such as warming agents, cooling agents, tingling agents, flavors, sweeteners, sour tastes, bitter tastes, salty tastes, surfactants, breath freshening agents, anti-microbial agents, anti-bacterial agents, anti-calculus agents, antiplaque agents, fluoride compounds, remineralization agents, pharmaceuticals, micronutrients, throat care actives, tooth whitening agents, energy boosting agents, concentration boosting agents, appetite suppressants, colors and other actives may also be included in any or all portions or regions of the chewing gum or confectionery composition. Such components may be used in amounts sufficient to achieve their intended effects.

Any of the additional components discussed herein may be added to any region of the center-fill chewing gum or confectionery composition in their modified release form and/or without modified release (sometimes referred to as "free" components). In some embodiments, for instance, a single component may be added to the center-filled composition in its modified release form and free form. The modified release component and free component may be included together in the same region of the center-filled composition or, in some embodiments, the two components may be included in different regions of the composition.

In some other embodiments, for instance, two different components that provide the same functionality, e.g., two different flavors, sweeteners, tastes, sensations, or the like, may be included in a center-fill chewing gum or confectionery composition. In some embodiments, both components may have modified release properties. Alternatively, in some embodiments, one of the components may be modified release, whereas the other component may be free. The two components may be included in the same or different regions of the center-filled composition.

Types of individual ingredients for which optional managed release from a chewing gum or confectionery composition may be desired, include, but are not limited to sweeteners, flavors, actives, effervescing ingredients, appetite suppressors, breath fresheners, dental care ingredients, emulsifiers, flavor potentiators, bitterness masking or blocking ingredients, food acids, micronutrients, sensates, mouth moistening ingredients, throat care ingredients, colors, sour agents, bitter agents, salty agents, pharmaceuticals, energy boosting agents, concentration boosting agents and combinations thereof. Ingredients may be available in different forms such as, for example, liquid form, spray-dried form, or crystalline form. In some embodiments, a delivery system or chewing gum or confectionery composition may include the same type of ingredient in different forms. For example, a chewing gum composition may include a liquid flavor and a spray-dried version of the same flavor. In some embodiments, the ingredient may be in its free or encapsulated form and may be present in any region of the gum or confectionery composition such as in the center-fill, the gum or confectionery region, or the coating.

In some embodiments, an ingredient's release is modified such that when a consumer chews the chewing gum or consumes the confectionery product, they may experience an increase in the duration of flavor or sweetness perception and/or the ingredient is released or otherwise made available over a longer period of time. Modified release may be accomplished by any method known in the art, such as by encapsulation. Where modified release is due to encapsulation, this may be accomplished by a variety of means such as by spray coating or extrusion.

Additionally, if early and extended release of the ingredient is desired, the chewing gum or confectionery composition may include ingredients without modified release (sometimes referred to as "free" ingredients), as well as ingredients with modified release. In some embodiments, a free ingredient may be used to deliver an initial amount or "hit" of an ingredient (e.g., flavor, cooling agent) or an initial sensation or benefit caused by the ingredient (e.g., flavor, nasal action, cooling, warming, tingling, saliva generation, breath freshening, teeth whitening, throat soothing, mouth moistening, etc.). In some embodiments, the same ingredient can be provided with modified release characteristics to provide an additional or delayed amount of the same sensation or benefit. By using both the free ingredient and the ingredient with modified release characteristics, the sensation or benefit due to the ingredient may be provided over a longer period of time and/or perception of the sensation or benefit by a consumer may be improved. Also, in some embodiments the initial amount or "hit" of the ingredient may predispose or precondition the consumers' mouth or perception of the chewing gum or confectionery composition.

As another example, in some embodiments it may be desirable to provide a sustained release of an ingredient in a chewing gum or confectionery composition over time. To accomplish sustained release, the ingredient may be modified to allow for a lower concentration of the ingredient to be released over a longer period of time versus the release of a higher concentration of the ingredient over a shorter period of time. A sustained release of an ingredient may be advantageous in situations when the ingredient has a bitter or other bad taste at the higher concentrations. A sustained release of an ingredient also may be advantageous when release of the ingredient in higher concentrations over a shorter period of time may result in a lesser amount of the ingredient being optimally delivered to the consumer. For example, for a tooth whitening or breath freshening ingredient, providing too much of the ingredient too fast may result in a consumer swallowing a significant portion of the ingredient before the ingredient has had a chance to interact with the consumer's teeth, mucous membranes, and/or dental work, thereby wasting the ingredient or at least reducing the benefit of having the ingredient in the chewing gum or confectionery composition.

In some embodiments described herein, the gum region of the chewing gum composition or the confectionery region of the confectionery composition may include at least one modified release component. At least one modified release component optionally may be added to the center-fill and/or coating, as well. The additional modified release component that may be included in the center-fill and/or coating may be the same as or different from the modified release component contained in the gum or confectionery region.

### Flavors

In some embodiments, flavorants may include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors whose release profiles can be managed include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below.

In some embodiments, other flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used. These may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, .e., melonal (melon), 2,6-dimethyloctanal (green fruit), and 2-dodecenal (citrus, mandarin), cherry, grape, blueberry, blackberry, strawberry shortcake, and mixtures thereof.

In some embodiments, a flavoring agent may be employed in either liquid form and/or dried form. When employed in the latter form, suitable drying means such as spray drying the liquid may be used. Alternatively, the flavoring agent may be absorbed onto water soluble materials, such as cellulose, starch, sugar, maltodextrin, gum arabic and so forth or may be encapsulated. In still other embodiments, the flavoring agent may be adsorbed onto silicas, zeolites, and the like.

In some embodiments, the flavoring agents may be used in many distinct physical forms. Without being limited thereto, such physical forms include free forms, such as spray dried, powdered, beaded forms, encapsulated forms, and mixtures thereof.

Illustrations of the encapsulation of flavors as well as other additional components can be found in the examples provided herein. Typically, encapsulation of a
component will result in a delay in the release of the predominant amount of the component during consumption of a chewing gum or confectionery composition that includes the encapsulated component (e.g., as part of a delivery system added as an ingredient to the chewing gum composition). In some embodiments, the release profile of the ingredient (e.g., the flavor, sweetener, etc.) can be managed by managing various characteristics of the ingredient, delivery system containing the ingredient, and/or the chewing gum or confectionery composition containing the delivery system and/or how the delivery system is made. For example, characteristics might include one or more of the following: tensile strength of the delivery system, water solubility of the ingredient, water solubility of the encapsulating material, water solubility of the delivery system, ratio of ingredient to encapsulating material in the delivery system, average or maximum particle size of ingredient, average or maximum particle size of ground delivery system, the amount of the ingredient or the delivery system in the chewing gum or confectionery composition, ratio of different polymers used to encapsulate one or more ingredients, hydrophobicity of one or more polymers used to encapsulate one or more ingredients, hydrophobicity of the delivery system, the type or amount of coating on the delivery system, the type or amount of coating on an ingredient prior to the ingredient being encapsulated, etc.

### Sweetening Ingredients

The sweeteners involved may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumatococcus danielli (Thaumatin I and II) and talin;
(f) the sweetener monatin (2-hydroxy-2-(indol-3-ylmethyl)-4-aminoglutaric acid) and its derivatives; and
(g) the sweetener Lo han guo (sometimes also referred to as "Lo han kuo").

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K).

In some embodiments, the sweetener may be a polyol. Polyols can include, but are not limited to glycerol, sorbitol, maltitol, maltitol syrup, mannitol, isomalt, erythritol, xylitol, hydrogenated starch hydrolysates, polyglycitol syrups, polyglycitol powders, lactitol, and combinations thereof.

The active component (e.g., sweetener), which is part of the delivery system, may be used in amounts necessary to impart the desired effect associated with use of the active component (e.g., sweetness). In general, an effective amount of intense sweetener may be utilized to provide the level of sweetness desired, and this amount may vary with the sweetener selected. The intense sweetener may be present in amounts from about 0.001% to about 3%, by weight of the composition, depending upon the sweetener or combination of sweeteners used. The exact range of amounts for each type of sweetener may be selected by those skilled in the art.

### Sensate Ingredients

Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1--ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT® type MGA); 3-1-menthoxypropane-1,2-diol (from Takasago, FEMA 3784); and menthyl lactate; (from Haarman & Reimer, FEMA 3748, tradename FRESCOLAT® type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others. These and other suitable cooling agents are further described in the following U.S. patents: U.S. 4,230,688; 4,032,661; 4,459,425; 4,136,163; 5,266,592; 6,627,233.

In some embodiments, warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. In some embodiments, useful warming compounds can include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropyl alcohol, iso-amylalcohol, benzyl alcohol, glycerine, and combinations thereof.

In some embodiments, a tingling sensation can be provided. One such tingling sensation is provided by adding jambu, oleoresin, or spilanthol to some examples. In some embodiments, alkylamides extracted from materials such as jambu or sanshool can be included. Additionally, in some embodiments, a sensation is created due to effervescence.

Such effervescence is created by combining an alkaline material with an acidic material. In some embodiments, an alkaline material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Patent No. 6,780,443.

Sensate components may also be referred to as "trigeminal stimulants" such as those disclosed in U.S. Patent Application No. 205/0202118. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, methyl succinate, menthone glycerol ketals, bulk sweeteners such as xylitol, erythritol, dextrose, and sorbitol, and combinations thereof. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerin ether, unsaturated amides, and combinations thereof.

### Breath Freshening Ingredients

Breath fresheners can include essential oils as well as various aldehydes, alcohols, and similar materials. In some embodiments, essential oils can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, and orange. In some embodiments, aldehydes such as cinnamic aldehyde and salicylaldehyde can be used. Additionally, chemicals such as menthol, carvone, iso-garrigol, and anethole can function as breath fresheners. Of these, the most commonly employed are oils of peppermint, spearmint and chlorophyll.

In addition to essential oils and chemicals derived from them, in some embodiments breath fresheners can include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof. In some embodiments, the release profiles of probiotics can be managed for a gum including, but not limited to lactic acid producing microorganisms such as *Bacillus coagulans*, *Bacillus subtilis*, *Bacillus laterosporus, Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum, Lactococcus lactis*, *Pedioccocus acidilacti, Pedioccocus pentosaceus*, *Pedioccocus urinae, Leuconostoc mesenteroides, Bacillus coagulans, Bacillus subtilis, Bacillus laterosporus, Bacillus laevolacticus, Sporolactobacillus inulinus* and mixtures thereof. Breath fresheners are also known by the following trade names: Retsyn,™ Actizol,™ and Nutrazin.™ Examples of malodor-controlling compositions are also included in U.S. Patent No. 5,300,305 to Stapler et al. and in U.S. Patent Application Publication Nos. 2003/0215417 and 2004/0081713.

### Dental Care Ingredients

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. In some embodiments, dental care ingredients can also include tetrasodium pyrophosphate and
sodium tri-polyphosphate, sodium bicarbonate, sodium acid pyrophosphate, sodium tripolyphosphate, xylitol, sodium hexametaphosphate.

In some embodiments, peroxides such as carbamide peroxide, calcium peroxide, magnesium peroxide, sodium peroxide, hydrogen peroxide, and peroxydiphospate are included. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Further examples can include surfactants such as sodium stearate, sodium ricinoleate, and sodium lauryl sulfate surfactants for use in some embodiments to achieve increased prophylactic action and to render the dental care ingredients more cosmetically acceptable. Surfactants can preferably be detersive materials which impart to the composition detersive and foaming properties. Suitable examples of surfactants are water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, dental care ingredients can include antibacterial agents such as, but not limited to, triclosan, chlorhexidine, zinc citrate, silver nitrate, copper, limonene, and cetyl pyridinium chloride. In some embodiments, additional anticaries agents can include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride can be included. In some embodiments, a fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride (SnF₂-KF), sodium hexafluorostannate, stannous chlorofluoride, sodium fluorozirconate, and sodium monofluorophosphate. In some embodiments, urea is included.

Further examples are included in the following U.S. patents and U.S. published patent applications: U.S. Patent Nos. 5,227,154 to Reynolds, 5,378,131 to Greenberg, 6,846,500 to Luo et al., 6,733,818 to Luo et al., 6,696,044 to Luo et al., 6,685,916 to Holme et al., 6,485,739 to Luo et al., 6,479,071 to Holme et al., 6,471,945 to Luo et al., U.S. Patent Publication Nos. 20050025721 to Holme et al., 2005008732 to Gebreselassie et al., and 20040136928 to Holme et al.

### Active Ingredients

Actives generally refer to those ingredients that are included in a delivery system and/or chewing gum or confectionery composition for the desired end benefit they provide to the user. In some embodiments, actives can include medicaments, nutrients, nutraceuticals, herbals, nutritional supplements, pharmaceuticals, drugs, and the like and combinations thereof.

Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, anti-neoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra™, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, antipyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, anti-thrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in the present invention can include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin™, ibuprofen, aspirin, acetaminophen, and combinations thereof that may optionally include caffeine.

Other drug active ingredients for use in embodiments can include antidiarrheals such as Immodium™ AD, anti-histamines, anti-tussives, decongestants, vitamins, and breath fresheners. Also contemplated for use herein are anxiolytics such as Xanax™; anti-psychotics such as Clozaril™ and Haldol™; non-steroidal anti-inflammatories (NSAID's) such as ibuprofen, naproxen sodium, Voltaren™ and Lodine™, anti-histamines such as Claritin™, Hismanal™, Relafen™, and Tavist™; anti-emetics such as Kytril™ and Cesamet™; bronchodilators such as Bentolin™, Proventil™; anti-depressants such as Prozac™, Zoloft™, and Paxil™; anti-migraines such as Imigra™, ACE-inhibitors such as Vasotec™, Capoten™ and Zestril™; anti-Alzheimer's agents, such as Nicergoline™; and CaH-antagonists such as Procardia™, Adalat™, and Calan™.

The popular H2-antagonists which are contemplated for use in the present invention include cimetidine, ranitidine hydrochloride, famotidine, nizatidien, ebrotidine, mifentidine, roxatidine, pisatidine and aceroxatidine.

Active antacid ingredients can include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of nutritional supplements may also be used as active ingredients including virtually any vitamin or mineral. For example, vitamin A, vitamin C, vitamin D, vitamin E, vitamin K, vitamin B₆, vitamin B₁₂, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements that can be used as active ingredients are set forth in U.S. Patent Application Publication Nos. 2003/0157213 A1, 2003/0206993 and 2003/0099741 A1.

Various herbals may also be used as active ingredients such as those with various medicinal or dietary supplement properties. Herbals are generally aromatic plants or plant parts and or extracts thereof that can be used medicinally or for flavoring. Suitable herbals can be used singly or in various mixtures. Commonly used herbs include Echinacea, Goldenseal, Calendula, Rosemary, Thyme, Kava Kava, Aloe, Blood Root, Grapefruit Seed Extract, Black Cohosh, Ginseng, Guarana, Cranberry, Gingko Biloba, St. John's Wort, Evening Primrose Oil, Yohimbe Bark, Green Tea, Ma Huang, Maca, Bilberry, Lutein, and combinations thereof.

### Effervescing System Ingredients

An effervescent system may include one or more edible acids and one or more edible alkaline materials. The edible acid(s) and the edible alkaline material(s) may react together to generate effervescence.

In some embodiments, the alkaline material(s) may be selected from, but is not limited to, alkali metal carbonates, alkali metal bicarbonates, alkaline earth metal carbonates, alkaline earth metal bicarbonates, and combinations thereof. The edible acid(s) may be selected from, but is not limited to, citric acid, phosphoric acid, tartaric acid, malic acid, ascorbic acid, and combinations thereof. In some embodiments, an effervescing system may include one or more other ingredients such as, for example, carbon dioxide, oral care ingredients, flavorants, etc.

For examples of use of an effervescing system in a chewing gum, refer to U.S. Provisional Patent No. 60/618,222 filed October 13, 2004, and entitled "Effervescent Pressed Gum Tablet Compositions". Other examples can be found in U.S. Patent No. 6,235,318.

### Appetite Suppressor Ingredients

Appetite suppressors can be ingredients such as fiber and protein that function to depress the desire to consume food. Appetite suppressors can also include benzphetamine, diethylpropion, mazindol, phendimetrazine, phentermine, hoodia **(P57),** Olibra,™ ephedra, caffeine and combinations thereof. Appetite suppressors are also known by the following trade names: Adipex,™ Adipost,™ Bontril™ PDM, Bontril™ Slow Release, Didrex,™ Fastin,™ Ionamin,™ Mazanor,™ Melfiat,™ Obenix,™ Phendiet,™ Phendiet-105,™ Phentercot,™ Phentride,™ Plegine,™ Prelu-2,™ Pro-Fast,™ PT 105,™ Sanorex,™ Tenuate,™ Sanorex,™ Tenuate,™ Tenuate Dospan,™ Tepanil Ten-Tab,™ Teramine,™ and Zantryl.™ These and other suitable appetite suppressors are further described in the following U.S. patents: U.S. 6,838,431 to Portman, U.S. 6,716,815 to Portman, U.S. 6,558,690 to Portman, U.S. 6,468,962 to Portman, U.S. 6,436,899 to Portman.

### Potentiator Ingredients

Potentiators can consist of materials that may intensify, supplement, modify or enhance the taste and/or aroma perception of an original material without introducing a characteristic taste and/or aroma perception of their own. In some embodiments, potentiators designed to intensify, supplement, modify, or enhance the perception of flavor, sweetness, tartness, umami, kokumi, saltiness and combinations thereof can be included.

In some embodiments, examples of suitable potentiators, also known as taste potentiators include, but are not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), sugar acids, potassium chloride, sodium acid sulfate, hydrolyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and TIRs) and taste potentiator compositions that impart kokumi, as disclosed in U.S. Patent No. 5,679,397 to Kuroda et al. "Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs) and combinations thereof.

Additional examples of potentiators for the enhancement of salt taste include acidic peptides, such as those disclosed in U.S. Patent No. 6,974,597. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The sensation of warming or cooling effects may also be prolonged with the use of a hydrophobic sweetener as described in U.S. Patent Application Publication 2003/0072842 A1. For example, such hydrophobic sweeteners include those of the formulae I-XI as set forth below: 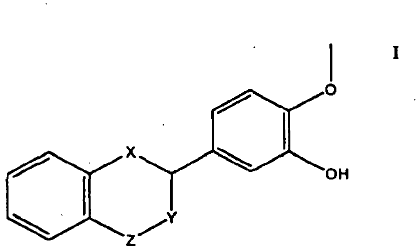 wherein X, Y and Z are selected from the group consisting of CH₂, O and S; 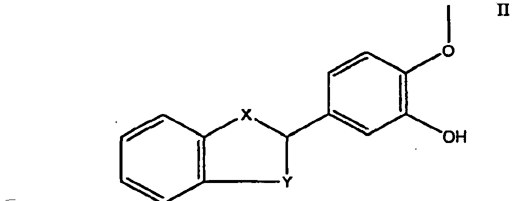 wherein X and Y are selected from the group consisting of S and O; 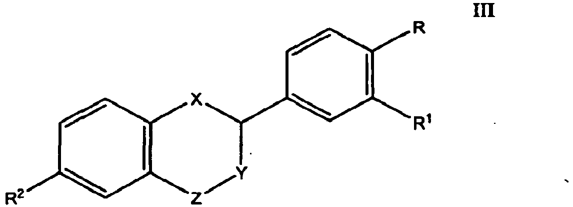 wherein X is S or O; Y is O or CH₂; Z is CH₂, SO₂ or S; R is OCH₃, OH or H; R¹ is SH or OH and R² is H or OH; 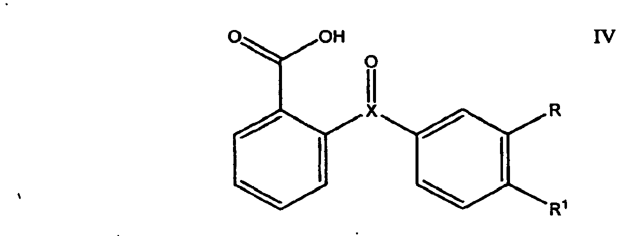 wherein X is C or S; R is OH or H and R¹ is OCH₃ or OH; 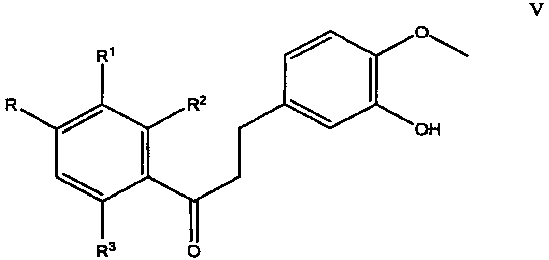 wherein R, R² and R³ are OH or H and R¹ is H or COOH; 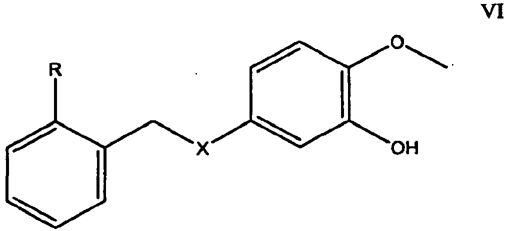 wherein X is O or CH₂ and R is COOH or H; 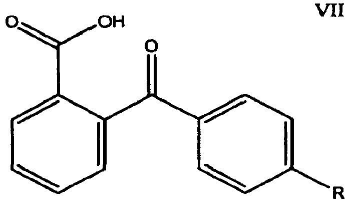 wherein R is CH₃CH₂, OH, N (CH3)₂ or Cl;

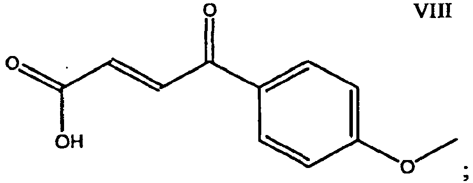

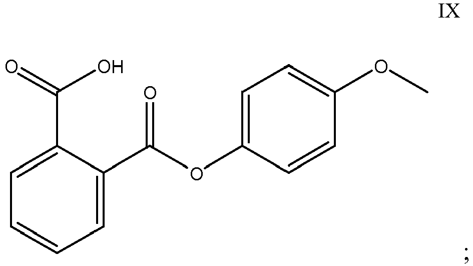

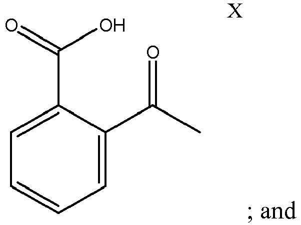

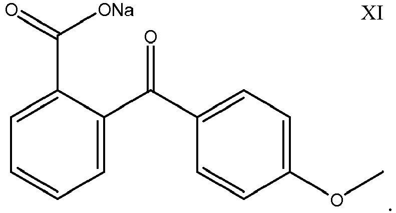

Perillartine may also be added as described in U.S. Patent No. 6,159,509.

### Food Acid Ingredients

Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

### Micronutrient Ingredients

Micronutrients can include materials that have an impact on the nutritional well being of an organism even though the quantity required by the organism to have the desired effect is small relative to macronutrients such as protein, carbohydrate, and fat. Micronutrients can include, but are not limited to vitamins, minerals, enzymes, phytochemicals, antioxidants, and combinations thereof.

In some embodiments, vitamins can include fat soluble vitamins such as vitamin A, vitamin D, vitamin E, and vitamin K and combinations thereof. In some embodiments, vitamins can include water soluble vitamins such as vitamin C (ascorbic acid), the B vitamins (thiamine or B₁, riboflavoin or B₂, niacin or B₃, pyridoxine or B₆, folic acid or B₉, cyanocobalimin or B₁₂, pantothenic acid, biotin), and combinations thereof.

In some embodiments minerals can include but are not limited to sodium, magnesium, chromium, iodine, iron, manganese, calcium, copper, fluoride, potassium, phosphorous, molybdenum, selenium, zinc, and combinations thereof.

In some embodiments micronutrients can include but are not limited to L-carnitine, choline, coenzyme Q10, alpha-lipoic acid, omega-3-fatty acids, pepsin, phytase, trypsin, lipases, proteases, cellulases, and combinations thereof.

Antioxidants can include materials that scavenge free radicals. In some embodiments, antioxidants can include but are not limited to ascorbic acid, citric acid, rosemary oil, vitamin A, vitamin E, vitamin E phosphate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and combinations thereof.

In some embodiments phytochemicals can include but are not limited to cartotenoids, chlorophyll, chlorophyllin, fiber, flavanoids, anthocyanins, cyaniding, delphinidin, malvidin, pelargonidin, peonidin, petunidin, flavanols, catechin, epicatechin, epigallocatechin, epigallocatechingallate, theaflavins, thearubigins, proanthocyanins, flavonols, quercetin, kaempferol, myricetin, isorhamnetin, flavononeshesperetin, naringenin, eriodictyol, tangeretin, flavones, apigenin, luteolin, lignans, phytoestrogens, resveratrol, isoflavones, daidzein, genistein, glycitein, soy isoflavones, and combinations thereof.

### Mouth Moistening Ingredients

Mouth moisteners can include, but are not limited to, saliva stimulators such as acids and salts and combinations thereof. In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Mouth moisteners can also include hydrocolloid materials that hydrate and may adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. In some embodiments, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethlcellulose (CMC), methylcellulose (MC), hydroxypropylmethylcellulose (HPCM), and hydroxypropylcellulose (MPC), and combinations thereof.

Similarly, humectants which can provide a perception of mouth hydration can be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

### Throat Care Ingredients

Throat soothing ingredients can include analgesics, anesthetics, demulcents, antiseptic, and combinations thereof. In some embodiments, analgesics/anesthetics can include menthol, phenol, hexylresorcinol, benzocaine, dyclonine hydrochloride, benzyl alcohol, salicyl alcohol, and combinations thereof. In some embodiments, demulcents can include but are not limited to slippery elm bark, pectin, gelatin, and combinations thereof. In some embodiments, antiseptic ingredients can include cetylpyridinium chloride, domiphen bromide, dequalinium chloride, and combinations thereof.

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof can be included.

In some embodiments, throat soothing agents such as honey, propolis, aloe vera, glycerine, menthol and combinations thereof can be included. In still other embodiments, cough suppressants can be included. Such cough suppressants can fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). In some embodiments, ingredients from either or both groups can be included.

In still other embodiments, antitussives can include, but are not limited to, the group consisting of codeine, dextromethorphan, dextrorphan, diphenhydramine, hydrocodone, noscapine, oxycodone, pentoxyverine and combinations thereof. In some embodiments, antihistamines can include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines can include, but are not limited to, astemizole, cetirizine, ebastine, fexofenadine, loratidine, terfenadine, and combinations thereof.

In some embodiments, expectorants can include, but are not limited to, ammonium chloride, guaifenesin, ipecac fluid extract, potassium iodide and combinations thereof. In some embodiments, mucolytics can include, but are not limited to, acetylcycsteine, ambroxol, bromhexine and combinations thereof. In some embodiments, analgesic, antipyretic and anti-inflammatory agents can include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. In some embodiments, local anesthetics can include, but are not limited to, lidocaine, benzocaine, phenol, dyclonine, benzonotate and mixtures thereof.

In some embodiments nasal decongestants and ingredients that provide the perception of nasal clearing can be included. In some embodiments, nasal decongestants can include but are not limited to phenylpropanolamine, pseudoephedrine, ephedrine, phenylephrine, oxymetazoline, and combinations thereof. In some embodiments ingredients that provide a perception of nasal clearing can include but are not limited to menthol, camphor, borneol, ephedrine, eucalyptus oil, peppermint oil, methyl salicylate, bornyl acetate, lavender oil, wasabi extracts, horseradish extracts, and combinations thereof. In some embodiments, a perception of nasal clearing can be provided by odoriferous essential oils, extracts from woods, gums, flowers and other botanicals, resins, animal secretions, and synthetic aromatic materials.

In some embodiments, one or more colors can be included. As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), or combinations thereof. In some embodiments, exempt from certification or natural colors can include, but are not limited to annatto extract, (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120); carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and combinations thereof.

In some embodiments, certified colors can include, but are not limited to, FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and combinations thereof. In some embodiments, certified colors can include FD&C aluminum lakes. These consist of the aluminum salts of FD&C dyes extended on an insoluble substrate of alumina hydrate. Additionally, in some embodiments, certified colors can be included as calcium salts.

### Multiple Ingredients

In some embodiments, a delivery system or chewing gum or confectionery composition may include two or more ingredients for which managed release from the chewing gum or confection during consumption is desired. In some embodiments, the ingredients may be encapsulated or otherwise included separately in different delivery systems. Alternatively, in some embodiments the ingredients may be encapsulated or otherwise included in the same delivery system. As another possibility, one or more of the ingredients may be free (e.g., unencapsulated) while one or more other ingredients may be encapsulated.

A chewing gum or confectionery composition may include a group of ingredients for which managed release of the group during consumption of the chewing gum or confectionery composition is desired. Groups of two or more ingredients for which managed release from a chewing gum or confectionery composition during consumption thereof may be desired include, but are not limited to: color and flavor, multiple flavors, multiple colors, cooling agent and flavor, warming agent and flavor, cooling agent and warming agent, cooling agent and high intensity sweetener, warming agent and high intensity sweetener, multiple cooling agents (e.g., WS-3 and WS-23, WS-3 and menthyl succinate), menthol and one or more cooling agents, menthol and one or more warming agents, multiple warming agents, high intensity sweetener(s) and tooth whitening active(s), high intensity sweetener(s) and breath freshening active(s), an ingredient with some bitterness and a bitterness suppressor for the ingredient, multiple high intensity sweeteners (e.g., ace-k and aspartame), multiple tooth whitening actives (e.g., an abrasive ingredient and an antimicrobial ingredient, a peroxide and a nitrate, a warming agent and a polyol, a cooling agent and a polyol, multiple polyols, a warming agent and micronutrient, a cooling agent and a micronutrient, a warming agent and a mouth moistening agent, a cooling agent and a mouth moistening agent, a warming agent and a throat care agent, a cooling agent and a throat care agent, a warming agent and a food acid, a cooling agent and food acid, a warming agent and an emulsifier/surfactant, a cooling agent and an emulsifier/surfactant, a warming agent and a color, a cooling agent and a color, a warming agent and a flavor potentiator, a cooling agent and a flavor potentiator, a warming agent with sweetness potentiator, a cooling agent with a sweetness potentiator, a warming agent and an appetite suppressant, a cooling agent and an appetite suppressant, a high intensity sweetener and a flavor, a cooling agent and a teeth whitening agent, a warming agent and a teeth whitening agent, a warming agent and breath freshening agent, a cooling agent and a breath freshening agent, a cooling agent and an effervescing system, a warming agent and an effervescing system, a warming agent and an antimicrobial agent, a cooling agent and an antimicrobial agent, multiple anticalculus ingredients, multiple remineralization ingredients, multiple surfactants, remineralization ingredients with demineralization ingredients, acidic ingredients with acid buffering ingredients, anticalculus ingredients with antibacterial ingredients, remineralization ingredients with anticalculus ingredients, anticalculus ingredients with remineralization ingredients with antibacterial ingredients, surfactant ingredients with anticalculus ingredients, surfactant ingredients with antibacterial ingredients, surfactant ingredients with remineralization ingredients, surfactants with anticalculus ingredients with antibacterial ingredients, multiple types of vitamins or minerals, multiple micronutrients, multiple acids, multiple antimicrobial ingredients, multiple breath freshening ingredients, breath freshening ingredients and antimicrobial ingredients, multiple appetite suppressors, acids and bases that react to effervesce, a bitter compound with a high intensity sweetener, a cooling agent and an appetite suppressant, a warming agent and an appetite suppressant, a high intensity sweetener and an appetite suppressant, a high intensity sweetener with an acid, a probiotic ingredient and a prebiotic ingredient, a vitamin and a mineral, a metabolic enhancement ingredient with a macronutrient, a metabolic enhancement ingredient with a micronutrient, an enzyme with a substrate, a high intensity sweetener with a sweetness potentiator, a cooling compound with a cooling potentiator, a flavor with a flavor potentiator, a warming compound with a warming potentiator, a flavor with salt, a high intensity sweetener with salt, an acid with salt, a cooling compound with salt, a warming compound with salt, a flavor with a surfactant, an astringent compound with an ingredient to provide a sensation of hydration, etc. In some embodiments, the multiple ingredients may be part of the same delivery system or may be part of different delivery systems. Different delivery systems may use the same or different encapsulating materials.

Typically, encapsulation of the multiple ingredients will result in a delay in the release of the predominant amount of the multiple ingredients during consumption of a chewing gum or confectionery composition that includes the encapsulated multiple ingredients (e.g., as part of a delivery system added as an ingredient to the chewing gum). This may be particularly helpful in situations wherein separate encapsulation of the ingredients may cause them to release with different release profiles. For example, different high intensity sweeteners may have different release profiles because they have different water solubilities or differences in other characteristics. Encapsulating them together may cause them to release more simultaneously.

In some embodiments, the release profile of the multiple ingredients can be managed for a gum by managing various characteristics of the multiple ingredients, the delivery system containing the multiple ingredients, and/or the chewing gum or confection containing the delivery system and/or how the delivery system is made in a manner as previously discussed above.

The additional components, as described above, may be used in one or more regions or layers of the gum or confectionery composition, such as in the center-fill, the gum or confectionery region or the coating as desired. The amounts for the additional components are set forth in Table 1, below. The amounts provided for the components are based on the specified region in which the component may be contained. In addition, the amounts in Table 1 generally apply to a component as it may be added to a center-fill gum composition in a free form, i.e., unencapsulated. In some embodiments, where a component is provided in an encapsulated form, an amount greater than those amounts as set forth in Table 1 may be used due to the modified release profile of the additional component. Also, because many of the components shown in Table 1 are optional, the amounts represent amounts used when the component is selected for inclusion in the composition. In other words, the lower limit of 0% is not included even though the component may not be present.

The components listed in Table 1, below, may be added to one or more regions or layers of the center-fill gum or confection in their encapsulated and/or unencapsulated forms, as well as in combination with any of the other optional components. For instance, a single component may be added to a center-fill gum in its encapsulated and unencapsulated forms. The two different forms of the component may be added to the same or different region of the center-fill gum in the same or different amounts.

In some embodiments, a single component may be added in two or more different encapsulated forms. In particular, two or more different encapsulating materials, such as different polymers, may be used to encapsulate two or more separate portions of the component. The different encapsulated forms of the same component may be added to the same or different region of the center-filled product in the same or different amounts. Further, in some embodiments, an unencapsulated form of the same component may be added in combination with the two or more different encapsulated forms. The unencapsulated form of the component may be added to any region of the center-filled product in the same or different amount from the encapsulated forms. Moreover, some embodiments may add an unencapsulated form of a similar component in combination with the two or more different encapsulated forms. For instance, two encapsulated forms of a single sweetener may be used in combination with an unencapsulated form of a different sweetener.

In some embodiments, combinations of two or more different components from Table 1, below, may be employed. In some embodiments, at least one of the different components may be encapsulated, while at least one of the other components of the combination may be unencapsulated. The multiple components may be of the same type, e.g., two different sweeteners. Alternatively, the multiple components may be from distinctly different categories, e.g., a sweetener and a warming agent. The different components may be added to the same or different regions of the center-fill gum or confection in the same or different amounts. The amounts of the component in a particular region may be selected depending on how the components may be perceived by the consumer in the different regions, the sensory experience or functional benefit desired to give to the consumer, regulatory issues, resulting bad taste if too much is used in any one region, etc.

Some embodiments may include multiple components from Table 1, below, each of which is encapsulated. The multiple encapsulated components may be included in the same or different regions of the gum or confection in the same or different amounts. The multiple encapsulated components may be the same type of component or from distinctly different categories.

In some embodiments in which multiple encapsulated components are added to the center-fill gum or confectionery composition, the multiple components may be encapsulated together or separately. In embodiments in which the multiple components are encapsulated together, the components may be mixed together and encapsulated by a single encapsulating material. In embodiments in which the multiple components are encapsulated separately, the material used to encapsulate the components may be the same or different.

As described above, Table 1 provides a list of components that optionally may be present in one or more regions of the gum or confectionery product. Suitable amounts that may be present in the coating, center-fill or gum region are provided in the table. The amounts in Table 1 are provided as ppm or weight % in a region or layer of the gum product. Table 1 is only representative and is not to be construed to limit the ingredients that can be included in the regions in any way.

**TABLE 1**

| **Components** | **Coating** | **Center-fill** | **Gum Region** |
|---|---|---|---|
| **I. Sensates** | | | |
| **A. Cooling agents** | | | |
| Menthol | 10-500 ppm | 10-500 ppm | 500 - 20,000 ppm |
| Xylitol | 5-80% | 5-95% | 5-80% |
| Erythritol | 5-80% | 5-95% | 5-80% |
| Menthane | 10-500 ppm | 10-500 ppm | 500 - 20,000 ppm |
| Menthone | 10-500 ppm | 10-500 ppm | 500 - 20,000 ppm |
| Menthyl acetate | 10-500 ppm | 10-500 ppm | 500 - 20,000 ppm |
| Menthyl salicylate | 10-500 ppm | 10-500 ppm | 500 - 20,000 ppm |
| WS-23 | 10-500 ppm | 10-500 ppm | 500 - 20,000 ppm |
| WS-3 | 10-500 ppm | 10-500 ppm | 500 - 20,000 ppm |
| Menthyl succinate | 10-500 ppm | 10-500 ppm | 500 - 20,000 ppm |
| 3,1-menthoxypropane 1,2-diol | 10-500 ppm | 10-500 ppm | 500 - 20,000 ppm |
| Glutarate esters | 10-500 ppm | 10-500 ppm | 500 - 20,000 ppm |
| dextrose | 10-500 ppm | 10-500 ppm | 500 - 20,000 ppm |
| sorbitol | 10-500 ppm | 10-500 ppm | 500 - 20,000 ppm |
| ketals | 10-500 ppm | 10-500 ppm | 500 - 20,000 ppm |
| menthone ketals | 10-500 ppm | 10-500 ppm | 500 - 20,000 ppm |
| menthone glycerol ketals | 10-500 ppm | 10-500 ppm | 500 - 20,000 ppm |
| substituted p-menthanes | 10-500 ppm | 10-500 ppm | 500 - 20,000 ppm |
| acyclic carboxamides | 10-500 ppm | 10-500 ppm | 500 - 20,000 ppm |
| mono menthyl glutarate | 10-500 ppm | 10-500 ppm | 500 - 20,000 ppm |
| substituted cyclohexanamides | 10-500 ppm | 10-500 ppm | 500 - 20,000 ppm |
| substituted cyclohexane carboxamides | 10-500 ppm | 10-500 ppm | 500 - 20,000 ppm |
| substituted ureas and sulfonamides | 10-500 ppm | 10-500 ppm | 500 - 20,000 ppm |
| substituted menthanols | 10-500 ppm | 10-500 ppm | 500 - 20,000 ppm |
| hydroxymethyl | 10-500 ppm | 10-500 ppm | 500 - 20,000 ppm |
| hydroxymethyl derivatives of p-menthane | 10-500 ppm | 10-500 ppm | 500 - 20,000 ppm |
| 2-mercapto-cyclo-decanone | 10-500 ppm | 10-500 ppm | 500 - 20,000 ppm |
| hydroxycarboxylic acids with 2-6 carbon atoms | 10-500 ppm | 10-500 ppm | 500 - 20,000 ppm |
| cyclohexanamides | 10-500 ppm | 10-500 ppm | 500 - 20,000 ppm |
| 1-isopulegol | 10-500 ppm | 10-500 ppm | 500 - 20,000 ppm |
| 3-(1-menthoxy)-2-methylpropane-1,2-diot | 10-500 ppm | 10-500 ppm | 500 - 20,000 ppm |
| p-menthane-2,3-diol | 10-500 ppm | 10-500 ppm | 500 - 20,000 ppm |
| p-menthane-3,8-diol | 10-500 ppm | 10-500 ppm | 500 - 20,000 ppm |
| 6-isopropyl-9-methyl-1,4-dioxaspiro[4,5]decane-2-methanol | 10-500 ppm | 10-500 ppm | 500 - 20,000 ppm |
| trimethylcyclohexanol | 10-500 ppm | 10-500 ppm | 500 - 20,000 ppm |
| N-ethyl-2-isopropyl-5-methylcyclohexanecarboxamide | 10-500 ppm | 10-500 ppm | 500 - 20,000 ppm |
| Japanese mint oil | 10-500 ppm | 10-500 ppm | 500 - 20,000 ppm |
| peppermint oil | 10-500 ppm | 10-500 ppm | 500 - 20,000 ppm |
| 3-(1-menthoxy)ethan-1-ol | 10-500 ppm | 10-500 ppm | 500 - 20,000 ppm |
| 3-(1-menthoxy)propan-1-ol | 10-500 ppm | 10-500 ppm | 500 - 20,000 ppm |
| 3-(1-menthoxy)butan-1-ol | 10-500 ppm | 10-500 ppm | 500 - 20,000 ppm |
| 1-menthylacetic acid N-ethylamide | 10-500 ppm | 10-500 ppm | 500 - 20,000 ppm |
| 1-menthyl-4-hydroxypentanoate | 10-500 ppm | 10-500 ppm | 500 - 20,000 ppm |
| 1-menthyl-3-hydroxybutyrate | 10-500 ppm | 10-500 ppm | 500 - 20,000 ppm |
| N,2,3-trimethyl-2-( 1-methylethyl)-butanamide | 10-500 ppm | 10-500 ppm | 500 - 20,000 ppm |
| n-ethyl-t-2-c-6 nonadienamide | 10-500 ppm | 10-500 ppm | 500 - 20,000 ppm |
| N,N-dimethyl menthyl succinamide | 10-500 ppm | 10-500 ppm | 500 - 20,000 ppm |
| substituted p-menthane-carboxamides | 10-500 ppm | 10-500 ppm | 500 - 20,000 ppm |
| 2-isopropanyl-5-methylcyclohexanol | 10-500 ppm | 10-500 ppm | 500 - 20,000 ppm |
| menthyl lactate | 10-500 ppm | 10-500 ppm | 500 - 20,000 ppm |
| WS-30 | 10-500 ppm | 10-500 ppm | 500 - 20,000 ppm |
| WS-14 | 10-500 ppm | 10-500 ppm | 500 - 20,000 ppm |
| Eucalyptus extract | 10-500 ppm | 10-500 ppm | 500 - 20,000 ppm |
| Menthol PG carbonate | 10-500 ppm | 10-500 ppm | 500 - 20,000 ppm |
| Menthol EG carbonate | 10-500 ppm | 10-500 ppm | 500 - 20,000 ppm |
| Menthol glyceryl ether | 10-500 ppm | 10-500 ppm | 500 - 20,000 ppm |
| N-tertbutyl-p-menthane-3-carboxamide | 10-500 ppm | 10-500 ppm | 500 - 20,000 ppm |
| P-menthane-3-carboxylic acid glycerol ester | 10-500 ppm | 10-500 ppm | 500 - 20,000 ppm |
| Methyl-2-isopryl-bicyclo (2.2.1) | 10-500 ppm | 10-500 ppm | 500 - 20,000 ppm |
| Heptane-2-carboxamide | 10-500 ppm | 10-500 ppm | 500 - 20,000 ppm |
| Menthol methyl ether | 10-500 ppm | 10-500 ppm | 500 - 20,000 ppm |
| Methyl glutarate | 10-500 ppm | 10-500 ppm | 500 - 20,000 ppm |
| menthyl pyrrolidone carboxylate | 10-500 ppm | 10-500 ppm | 500 - 20,000 ppm |
| WS-5 | 10-500 ppm | 10-500 ppm | 500 - 20,000 ppm |
| WS-15 | 10-500 ppm | 10-500 ppm | 500 - 20,000 ppm |

| **B. Warming agents** | | | |
|---|---|---|---|
| vanillyl alcohol n-butylether | 1-1000 ppm | 1-1500 ppm | 10-8000 ppm |
| vanillyl alcohol n-propylether | 1-1000 ppm | 1-1500 ppm | 10-8000 ppm |
| vanillyl alcohol isopropylether | 1-1000 ppm | 1-1500 ppm | 10-8000 ppm |
| vanillyl alcohol isobutylether | 1-1000 ppm | 1-1500 ppm | 10-8000 ppm |
| vanillyl alcohol n-aminoether | 1-1000 ppm | 1-1500 ppm | 10-8000 ppm |
| vanillyl alcohol isoamylether | 1-1000 ppm | 1-1500 ppm | 10-8000 ppm |
| vanillyl alcohol n-hexylether | 1-1000 ppm | 1-1500 ppm | 10-8000 ppm |
| vanillyl alcohol methylether | 1-1000 ppm | 1-1500 ppm | 10-8000 ppm |
| vanillyl alcohol ethylether | 1-1000 ppm | 1-1500 ppm | 10-8000 ppm |
| gingerol | 1-1000 ppm | 1-1500 ppm | 10-8000 ppm |
| shogaol | 1-1000 ppm | 1-1500 ppm | 10-8000 ppm |
| paradol | 1-1000 ppm | 1-1500 ppm | 10-8000 ppm |
| zingerone | 1-1000 ppm | 1-1500 ppm | 10-8000 ppm |
| capsaicin | 1-1000 ppm | 1-1500 ppm | 10-8000 ppm |
| dihydrocapsaicin | 1-1000 ppm | 1-1500 ppm | 10-8000 ppm |
| nordihydrocapsaicin | 1-1000 ppm | 1-1500 ppm | 10-8000 ppm |
| homocapsaicin | 1-1000 ppm | 1-1500 ppm | 10-8000 ppm |
| homodihydrocapsaicin | 1-1000 ppm | 1-1500 ppm | 10-8000 ppm |
| ethanol | 1-1000 ppm | 1-1500 ppm | 10-8000 ppm |
| isopropyl alcohol | 1-1000 ppm | 1-1500 ppm | 10-8000 ppm |
| iso-amylalcohol | 1-1000 ppm | 1-1500 ppm | 10-8000 ppm |
| benzyl alcohol | 1-1000 ppm | 1-1500 ppm | 10-8000 ppm |
| glycerine | 1-1000 ppm | 1-1500 ppm | 10-8000 ppm |
| chloroform | 1-1000 ppm | 1-1500 ppm | 10-8000 ppm |
| eugenol | 1-1000 ppm | 1-1500 ppm | 10-8000 ppm |
| cinnamon oil | 1-1000 ppm | 1-1500 ppm | 10-8000 ppm |
| cinnamic aldehyde | 1-1000 ppm | 1-1500 ppm | 10-8000 ppm |

| **C. Tingling agents** | | | |
|---|---|---|---|
| Jambu Oleoresin or para cress | 5-500 ppm | 5-500 ppm | 50-5000 ppm |
| Japanese pepper extract | 5-500 ppm | 5-500 ppm | 50-5000 ppm |
| black pepper extract | 5-500 ppm | 5-500 ppm | 50-5000 ppm |
| Echinacea extract | 5-500 ppm | 5-500 ppm | 50-5000 ppm |
| Northern Prickly Ash extract | 5-500 ppm | 5-500 ppm | 50-5000 ppm |
| red pepper oleoresin | 5-500 ppm | 5-500 ppm | 50-5000 ppm |
| effervescing agents | 5-500 ppm | 5-500 ppm | 50-5000 ppm |
| Spilanthol | 5-500 ppm | 5-500 ppm | 50-5000 ppm |
| Sanshool | 5-500 ppm | 5-500 ppm | 50-5000 ppm |

| **II. Flavors** | | | |
|---|---|---|---|
| spearmint oil | 0.01 - 10.0% | 0.01 - 10.0 % | 0.5 - 30.0 % |
| cinnamon oil | 0.01 - 10.0% | 0.01 - 10.0 % | 0.5 - 30.0 % |
| oil of wintergreen | 0.01 - 10.0% | 0.01 - 10.0 % | 0.5 - 30.0 % |
| peppermint oil | 0.01 - 10.0% | 0.01 - 10.0 % | 0.5 - 30.0 % |
| clove oil | 0.01 - 10.0% | 0.01 - 10.0 % | 0.5 - 30.0 % |
| bay oil | 0.01 - 10.0% | 0.01 - 10.0 % | 0.5 - 30.0 % |
| anise oil | 0.01 - 10.0% | 0.01 - 10.0 % | 0.5 - 30.0 % |
| eucalyptus oil | 0.01 - 10.0% | 0.01 - 10.0 % | 0.5 - 30.0 % |
| thyme oil | 0.01 - 10.0% | 0.01 - 10.0 % | 0.5 - 30.0 % |
| cedar leaf oil | 0.01 - 10.0% | 0.01 - 10.0 % | 0.5 - 30.0 % |
| oil of nutmeg | 0.01 - 10.0% | 0.01 - 10.0 % | 0.5 - 30.0 % |
| allspice | 0.01 - 10.0% | 0.01 - 10.0 % | 0.5 - 30.0 % |
| oil of sage | 0.01 - 10.0% | 0.01 - 10.0 % | 0.5 - 30.0 % |
| mace | 0.01 - 10.0% | 0.01 - 10.0 % | 0.5 - 30.0 % |
| oil of bitter almonds | 0.01 - 10.0% | 0.01 - 10.0 % | 0.5 - 30.0 % |
| cassia oil | 0.01 - 10.0% | 0.01 - 10.0 % | 0.5 - 30.0 % |
| vanilla | 0.01 - 10.0% | 0.01 - 10.0 % | 0.5 - 30.0 % |
| lemon | 0.01 - 10.0% | 0.01 - 10.0 % | 0.5 - 30.0 % |
| orange | 0.01 - 10.0% | 0.01 - 10.0 % | 0.5 - 30.0 % |
| lime | 0.01 - 10.0% | 0.01 - 10.0 % | 0.5 - 30.0 % |
| grapefruit | 0.01 - 10.0% | 0.01 - 10.0 % | 0.5 - 30.0 % |
| apple | 0.01 - 10.0% | 0.01 - 10.0% | 0.5 - 30.0 % |
| pear | 0.01 - 10.0% | 0.01 - 10.0 % | 0.5 - 30.0 % |
| peach | 0.01 - 10.0% | 0.01 - 10.0 % | 0.5 - 30.0 % |
| grape | 0.01 - 10.0% | 0.01 - 10.0 % | 0.5 - 30.0 % |
| strawberry | 0.01 - 10.0% | 0.01 - 10.0 % | 0.5 - 30.0 % |
| raspberry | 0.01 - 10.0% | 0.01 - 10.0 % | 0.5 - 30.0 % |
| cherry | 0.01 - 10.0% | 0.01 - 10.0 % | 0.5 - 30.0 % |
| plum | 0.01 - 10.0% | 0.01 - 10.0 % | 0.5 - 30.0 % |
| pineapple | 0.01 - 10.0% | 0.01 - 10.0 % | 0.5 - 30.0 % |
| apricot | 0.01 - 10.0% | 0.01 - 10.0 % | 0.5 - 30.0 % |
| watermelon | 0.01 - 10.0% | 0.01 - 10.0 % | 0.5 - 30.0 % |
| chocolate | 0.01 - 10.0% | 0.01 - 10.0 % | 0.5 - 30.0 % |
| cola | 0.01 - 10.0% | 0.01 - 10.0 % | 0.5 - 30.0 % |
| maple | 0.01 - 10.0% | 0.01 - 10.0 % | 0.5 - 30.0 % |
| dulce de leche | 0.01 - 10.0% | 0.01 - 10.0 % | 0.5 - 30.0 % |
| raisin | 0.01 - 10.0% | 0.01 - 10.0 % | 0.5 - 30.0 % |
| caramel | 0.01 - 10.0% | 0.01 - 10.0 % | 0.5 - 30.0 % |
| cinnamyl acetate | 0.01 - 10.0% | 0.01 - 10.0 % | 0.5 - 30.0 % |
| cinnamaldehyde | 0.01 - 10.0% | 0.01 - 10.0 % | 0.5 - 30.0 % |
| citral diethylacetal | 0.01 - 10.0% | 0.01 - 10.0 % | 0.5 - 30.0 % |
| dihydrocarvyl acetate | 0.01 - 10.0% | 0.01 - 10.0 % | 0.5 - 30.0 % |
| eugenyl formate | 0.01 - 10.0% | 0.01 - 10.0 % | 0.5 - 30.0 % |
| p-methylamisol | 0.01 - 10.0% | 0.01 - 10.0 % | 0.5 - 30.0 % |
| acetaldehyde | 0.01 - 10.0% | 0.01 - 10.0 % | 0.5 - 30.0 % |
| benzaldehyde | 0.01 - 10.0% | 0.01 - 10.0 % | 0.5 - 30.0 % |
| anisic aldehyde | 0.01 - 10.0% | 0.01 - 10.0 % | 0.5 - 30.0 % |
| cinnamic aldehyde | 0.01 - 10.0% | 0.01 - 10.0 % | 0.5 - 30.0 % |
| citral | 0.01 - 10.0% | 0.01-10.0% | 0.5 - 30.0 % |
| neral | 0.01 - 10.0% | 0.01 - 10.0 % | 0.5 - 30.0 % |
| decanal | 0.01 - 10.0% | 0.01 - 10.0 % | 0.5 - 30.0 % |
| ethyl vanillin | 0.01 - 10.0% | 0.01 - 10.0 % | 0.5 - 30.0 % |
| heliotrope | 0.01 - 10.0% | 0.01 -10.0 % | 0.5 - 30.0 % |
| vanillin | 0.01 - 10.0% | 0.01 - 10.0 % | 0.5 - 30.0 % |
| alpha-amyl cinnamaldehyde | 0.01 - 10.0% | 0.01 - 10.0 % | 0.5 - 30.0 % |
| butyraldehyde | 0.01 - 10.0% | 0.01 - 10.0 % | 0.5 - 30.0 % |
| valeraldehyde | 0.01 -10.0% | 0.01 - 10.0 % | 0.5 - 30.0 % |
| citronellal | 0.01 - 10.0% | 0.01 - 10.0 % | 0.5 - 30.0 % |
| decanal | 0.01 - 10.0% | 0.01 - 10.0 % | 0.5 - 30.0 % |
| aldehyde C-8 | 0.01 - 10.0% | 0.01 - 10.0 % | 0.5 - 30.0 % |
| aldehyde C-9 | 0.01 - 10.0% | 0.01 - 10.0 % | 0.5 - 30.0 % |
| aldehyde C-12 | 0.01 - 10.0% | 0.01 - 10.0 % | 0.5 - 30.0 % |
| 2-ethyl butyraldehyde | 0.01 - 10.0% | 0.01 - 10.0 % | 0.5 - 30.0 % |
| hexenal | 0.01 - 10.0% | 0.01 - 10.0 % | 0.5 - 30.0 % |
| tolyl aldehyde | 0.01 - 10.0% | 0.01 - 10.0 % | 0.5 - 30.0 % |
| veratraldehyde | 0.01 - 10.0% | 0.01 - 10.0 % | 0.5 - 30.0 % |
| 2,6-dimethyl-5-heptenal | 0.01 - 10.0% | 0.01 - 10.0 % | 0.5 - 30.0 % |
| 2,6-dimethyloctanal | 0.01 - 10.0% | 0.01 - 10.0 % | 0.5 - 30.0 % |
| 2-dodecenal | 0.01 - 10.0% | 0.01 - 10.0 % | 0.5 - 30.0 % |
| strawberry shortcake | 0.01 - 10.0% | 0.01 - 10.0 % | 0.5 - 30.0 % |
| pomegranate | 0.01 - 10.0% | 0.01 - 10.0 % | 0.5 - 30.0 % |
| beef | 0.01 - 10.0% | 0.01 - 10.0 % | 0.5 - 30.0 % |
| chicken | 0.01 - 10.0% | 0.01 - 10.0 % | 0.5 - 30.0 % |
| cheese | 0.01 - 10.0% | 0.01 - 10.0 % | 0.5 - 30.0 % |
| onion | 0.01 - 10.0% | 0.01 - 10.0 % | 0.5 - 30.0 % |

| **III. Tastes** | | | |
|---|---|---|---|
| **A. Sweeteners** | | | |
| sucrose | 5-100% | 5-100% | 5-80% |
| dextrose | 5-100% | 5-100% | 5-80% |
| maltose | 5-100% | 5-100% | 5-80% |
| dextrin | 5-100% | 5-100% | 5-80% |
| xylose | 5-100% | 5-100% | 5-80% |
| ribose | 5-100% | 5-100% | 5-80% |
| glucose | 5-100% | 5-100% | 5-80% |
| mannose | 5-100% | 5-100% | 5-80% |
| galactose | 5-100% | 5-100% | 5-80% |
| fructose | 5-100% | 5-100% | 5-80% |
| invert sugar | 5-100% | 5-100% | 5-80% |
| fructo oligo saccharide syrups | 5-100% | 5-100% | 5-80% |
| partially hydrolyzed starch | 5-100% | 5-100% | 5-80% |
| corn syrup solids | 5-100% | 5-100% | 5-80% |
| sorbitol | 5-100% | 5-100% | 5-80% |
| xylitol | 5-100% | 5-100% | 5-80% |
| mannitol | 5-100% | 5-100% | 5-80% |
| galactitol | 5-100% | 5-100% | 5-80% |
| maltitol | 5-100% | 5-100% | 5-80% |
| Isomalt | 5-100% | 5-100% | 5-80% |
| lactitol | 5-100% | 5-100% | 5-80% |
| erythritol | 5-100% | 5-100% | 5-80% |
| hydrogenated starch hydrolysate | 5-100% | 5-100% | 5-80% |
| stevia | 10 - 20,000 ppm | 10 - 20,000 ppm | 10 - 20,000 ppm |
| dihydrochalcones | 10 - 20,000 ppm | 10 - 20,000 ppm | 10 - 20,000 ppm |
| monellin | 10 - 20,000 ppm | 10 - 20,000 ppm | 10 - 20,000 ppm |
| steviosides | 10 - 20,000 ppm | 10 - 20,000 ppm | 10 - 20,000 ppm |
| glycyrrhizin | 10 - 20,000 ppm | 10 - 20,000 ppm | 10 - 20,000 ppm |
| dihydroflavenol | 10 - 20,000 ppm | 10 - 20,000 ppm | 10 - 20,000 ppm |
| L-aminodicarboxylic acid aminoalkenoic acid ester amides | 10 - 20,000 ppm | 10 - 20,000 ppm | 10 - 20,000 ppm |
| sodium or calcium saccharin salts | 10 - 20,000 ppm | 10 - 20,000 ppm | 10 - 20,000 ppm |
| cyclamate salts | 10 - 20,000 ppm | 10 - 20,000 ppm | 10 - 20,000 ppm |
| sodium, ammonium or calcium salt of 3,4-dihydro-6-methyl-1,2,3-oxathiazine-4-one-2,2-dioxide | 10 - 20,000 ppm | 10 - 20,000 ppm | 10 - 20,000 ppm |
| Acesulfame-K | 10 - 20,000 ppm | 10 - 20,000 ppm | 10 - 20,000 ppm |
| free acid form of saccharin | 10 - 20,000 ppm | 10 - 20,000 ppm | 10 - 20,000 ppm |
| Aspartame | 10 - 20,000 ppm | 10 - 20,000 ppm | 10 - 20,000 ppm |
| Alitame | 10 - 20,000 ppm | 10 - 20,000 ppm | 10 - 20,000 ppm |
| Neotame | 10 - 20,000 ppm | 10 - 20,000 ppm | 10 - 20,000 ppm |
| methyl esters of L-aspartyl-L-phenylglycerine and L-aspartyl-L-2,5-dihydrophenyl-glycine | 10 - 20,000 ppm | 10 - 20,000 ppm | 10 - 20,000 ppm |
| L-aspartyl-2,5 -dihydro-L-phenylalanine | 10 - 20,000 ppm | 10 - 20,000 ppm | 10 - 20,000 ppm |
| L-aspartyl-L-(1-cyclohexen)-alanine | 10 - 20,000 ppm | 10 - 20,000 ppm | 10 - 20,000 ppm |
| Sucralose | 10 - 20,000 ppm | 10 - 20,000 ppm | 10 - 20,000 ppm |
| 1-chloro-1'-deoxysucrose | 10 - 20,000 ppm | 10 - 20,000 ppm | 10 - 20,000 ppm |
| 4-chloro-4-deoxy-alpha-D-galactopyranosyl-alpha-D-fructofuranoside | 10 - 20,000 ppm | 10 - 20,000 ppm | 10 - 20,000 ppm |
| 4-chloro-4-deoxygalactosucrose | 10 - 20,000 ppm | 10 - 20,000 ppm | 10 - 20,000 ppm |
| 4-chloro-4-deoxy-alpha-D-galactopyranosyl-1-chloro-1-deoxy-beta-D-fructo-f uranoside | 10 - 20,000 ppm | 10 - 20,000 ppm | 10 - 20,000 ppm |
| 4,1'-dichloro-4,1'-dideoxygalactosucrose | 10 - 20,000 ppm | 10 - 20,000 ppm | 10 - 20,000 ppm |
| 1',6'-dichloro1',6'-dideoxysucrose | 10 - 20,000 ppm | 10 - 20,000 ppm | 10 - 20,000 ppm |
| 4-chloro-4-deoxy-alpha-D-galactopyranosyl-1,6-dichloro-1,6-dideoxy-beta-D-fructofuranoside | 10 - 20,000 ppm | 10 - 20,000 ppm | 10 - 20,000 ppm |
| 4,1',6'-trichtoro-4,1',6'-trideoxygalactosucrose | 10 - 20,000 ppm | 10 - 20,000 ppm | 10 - 20,000 ppm |
| 4,6-dichloro-4,6-dideoxy-alpha-D-galactopyranosyl-6-chloro-6-deoxy-beta-D-fructofuranoside | 10 - 20,000 ppm | 10 - 20,000 ppm | 10 - 20,000 ppm |
| 4,6,6'-trichloro-4,6,6'-trideoxygalactosucrose | 10 - 20,000 ppm | 10 - 20,000 ppm | 10 - 20,000 ppm |
| 6,1',6'-trichloro-6,1',6'-trideoxysucrose | 10 - 20,000 ppm | 10 - 20,000 ppm | 10 - 20,000 ppm |
| 4,6-dichloro-4,6-dideoxy-alpha-D-galacto-pyranosyl-1,6-dichloro-1,6-dideox y-beta-D-fructofuranoside | 10 - 20,000 ppm | 10 - 20,000 ppm | 10 - 20,000 ppm |
| 4,6,1',6'-tetrachloro4,6,1',6'-tetradeoxygalacto-sucrose | 10 - 20,000 ppm | 10 - 20,000 ppm | 10 - 20,000 ppm |
| 4,6,1'6'-tetradeoxy-sucrose | 10 - 20,000 ppm | 10 - 20,000 ppm | 10 - 20,000 ppm |
| Thaumatin I and II | 10 - 20,000 ppm | 10 - 20,000 ppm | 10 - 20,000 ppm |
| Monatin | 10 - 20,000 ppm | 10 - 20,000 ppm | 10 - 20,000 ppm |

| **B. Sour** | | | |
|---|---|---|---|
| acetic acid | 0.00005 - 10% | 0.00005 - 10% | 0.00005 - 10% |
| adipic acid | 0.00005 - 10% | 0.00005 - 10% | 0.00005 - 10% |
| ascorbic acid | 0.00005 - 10% | 0.00005 - 10% | 0.00005 - 10% |
| butyric acid | 0.00005 - 10% | 0.00005 - 10% | 0.00005 - 10% |
| citric acid | 0.00005 - 10% | 0.00005 - 10% | 0.00005 - 10% |
| formic acid | 0.00005 - 10% | 0.00005 - 10% | 0.00005 - 10% |
| fumaric acid | 0.00005 - 10% | 0.00005 - 10% | 0.00005 - 10% |
| glyconic acid | 0.00005 - 10% | 0.00005 - 10% | 0.00005 - 10% |
| lactic acid | 0.00005 - 10% | 0.00005 - 10% | 0.00005 - 10% |
| phosphoric acid | 0.00005 - 10% | 0.00005 - 10% | 0.00005 - 10% |
| malic acid | 0.00005 - 10% | 0.00005 - 10% | 0.00005 - 10% |
| oxalic acid | 0.00005 - 10% | 0.00005 - 10% | 0.00005 - 10% |
| succinic acid | 0.00005 - 10% | 0.00005 - 10% | 0.00005 - 10% |
| tartaric acid | 0.00005 - 10% | 0.00005 - 10% | 0.00005 - 10% |

| **C. Bitter/Astringent** | | | |
|---|---|---|---|
| quinine | 0.01 - 100 ppm | 0.01 - 100 ppm | 0.01 - 100 ppm |
| naringin | 0.01 - 100 ppm | 0.01 - 100 ppm | 0.01 - 100 ppm |
| quassia | 0.01 - 100 ppm | 0.01 - 100 ppm | 0.01 - 100 ppm |
| phenyl thiocarbamide (PTC) | 0.01 - 100 ppm | 0.01 - 100 ppm | 0.01 - 100 ppm |
| 6-n-propylthiouracil (Prop) | 0.01 - 100 ppm | 0.01 - 100 ppm | 0.01 - 100 ppm |
| alum | 0.01 - 100 ppm | 0.01 - 100 ppm | 0.01 - 100 ppm |
| salicin | 0.01 - 100 ppm | 0.01 - 100 ppm | 0.01 - 100 ppm |
| caffeine | 0.01 - 100 ppm | 0.01 - 100 ppm | 0.01 - 100 ppm |

| **D. Salty** | | | |
|---|---|---|---|
| sodium chloride | 0.01 - 1% | 0.01 - 1% | 0.01 - 1% |
| calcium chloride | 0.01 - 1% | 0.01 - 1% | 0.01 - 1% |
| potassium chloride | 0.01 - 1% | 0.01 - 1% | 0.01 - 1% |
| l-lysine | 0.01 - 1% | 0.01 - 1% | 0.01 - 1% |

| **IV. Functional agents** | | | |
|---|---|---|---|
| **A. Surfactants** | | | |
| salts of fatty acids selected from the group consisting of C₈-C₂₄ | 0.001 - 2% | 0.001 - 2% | 0.001 - 2% |
| palmitoleic acid | 0.001 - 2% | 0.001 - 2% | 0.001 - 2% |
| oleic acid | 0.001 - 2% | 0.001 - 2% | 0.001 - 2% |
| eleosteric acid | 0.001 - 2% | 0.001 - 2% | 0.001 - 2% |
| butyric acid | 0.001 - 2% | 0.001 - 2% | 0.001 - 2% |
| caproic acid | 0.001 - 2% | 0.001 - 2% | 0.001 - 2% |
| caprylic acid | 0.001 - 2% | 0.001 - 2% | 0.001 - 2% |
| capric acid | 0.001 - 2% | 0.001 - 2% | 0.001 - 2% |
| lauric acid | 0.001 - 2% | 0.001 - 2% | 0.001 - 2% |
| myristic acid | 0.001 - 2% | 0.001 - 2% | 0.001 - 2% |
| palmitic acid | 0.001 - 2% | 0.001 - 2% | 0.001 - 2% |
| stearic acid | 0.001 - 2% | 0.001 - 2% | 0.001 - 2% |
| ricinoleic acid | 0.001 - 2% | 0.001 - 2% | 0.001 - 2% |
| arachidic acid | 0.001 - 2% | 0.001 - 2% | 0.001 - 2% |
| behenic acid | 0.001 - 2% | 0.001 - 2% | 0.001 - 2% |
| lignoceric acid | 0.001 - 2% | 0.001 - 2% | 0.001 - 2% |
| cerotic acid | 0.001 - 2% | 0.001 - 2% | 0.001 - 2% |
| sulfated butyl oleate | 0.001 - 2% | 0.001 - 2% | 0.001 - 2% |
| medium and long chain fatty acid esters | 0.001 - 2% | 0.001 - 2% | 0.001 - 2% |
| sodium oleate | 0.001 - 2% | 0.001 - 2% | 0.001 - 2% |
| salts of fumaric acid | 0.001 - 2% | 0.001 - 2% | 0.001 - 2% |
| potassium glomate | 0.001 - 2% | 0.001 - 2% | 0.001 - 2% |
| organic acid esters of mono- and diglycerides | 0.001 - 2% | 0.001 - 2% | 0.001 - 2% |
| stearyl monoglyceridyl citrate | 0.001 - 2% | 0.001 - 2% | 0.001 - 2% |
| succi stearin | 0.001 - 2% | 0.001 - 2% | 0.001 - 2% |
| dioctyl sodium sulfosuccinate | 0.001 - 2% | 0.001 - 2% | 0.001 - 2% |
| glycerol tristearate | 0.001 - 2% | 0.001 - 2% | 0.001 - 2% |
| lecithin | 0.001 - 2% | 0.001 - 2% | 0.001 - 2% |
| hydroxylated lecithin | 0.001 - 2% | 0.001 - 2% | 0.001 - 2% |
| sodium lauryl sulfate | 0.001 - 2% | 0.001 - 2% | 0.001 - 2% |
| acetylated monoglycerides | 0.001 - 2% | 0.001 - 2% | 0.001 - 2% |
| succinvlated monoglycerides | 0.001 - 2% | 0.001 - 2% | 0.001 - 2% |
| monoglyceride citrate | 0.001 - 2% | 0.001 - 2% | 0.001 - 2% |
| ethoxylated mono- and diglycerides | 0.001 - 2% | 0.001 - 2% | 0.001 - 2% |
| sorbitan monostearate | 0.001 - 2% | 0.001 - 2% | 0.001 - 2% |
| calcium stearyl-2-lactylate | 0.001 - 2% | 0.001 - 2% | 0.001 - 2% |
| sodium stearyl lactylate | 0.001 - 2% | 0.001 - 2% | 0.001 - 2% |
| lactylated fatty acid esters of glycerol and propylene glycerol | 0.001 - 2% | 0.001 - 2% | 0.001 - 2% |
| glycerol-lactoesters of C8-C24 fatty acids | 0.001 - 2% | 0.001 - 2% | 0.001 - 2% |
| polyglycerol esters of C8-C24 fatty acids | 0.001 - 2% | 0.001 - 2% | 0.001 - 2% |
| propylene glycol alginate | 0.001 - 2% | 0.001 - 2% | 0.001 - 2% |
| sucrose C8-C24 fatty acid esters | 0.001 - 2% | 0.001 - 2% | 0.001 - 2% |
| diacetyl tartaric and citric acid esters of mono- and diglycerides | 0.001 - 2% | 0.001 - 2% | 0.001 - 2% |
| triacetin | 0.001 - 2% | 0.001 - 2% | 0.001 - 2% |
| sarcosinate surfactants | 0.001 - 2% | 0.001 - 2% | 0.001 - 2% |
| isethionate surfactants | 0.001 - 2% | 0.001 - 2% | 0.001 - 2% |
| tautate surfactants | 0.001 - 2% | 0.001 - 2% | 0.001 - 2% |
| pluronics | 0.001 - 2% | 0.001 - 2% | 0.001 - 2% |
| polyethylene oxide condensates of alkyl phenols | 0.001 - 2% | 0.001 - 2% | 0.001 - 2% |
| products derived from the condensation of ethylene oxide with the reaction product of propylene oxide and ethylene diamine | 0.001 - 2% | 0.001 - 2% | 0.001 - 2% |
| ethylene oxide condensates of aliphatic alcohols | 0.001 - 2% | 0.001 - 2% | 0.001 - 2% |
| long chain tertiary amine oxides | 0.001 - 2% | 0.001 - 2% | 0.001 - 2% |
| long chain tertiary phosphine oxides | 0.001 - 2% | 0.001 - 2% | 0.001 - 2% |
| long chain dialkyl sulfoxides | 0.001 - 2% | 0.001 - 2% | 0.001 - 2% |

| **B. Breath freshening agents** | | | |
|---|---|---|---|
| spearmint oil | 0.001 - 10% | 0.001 - 10% | 0.001 - 10% |
| peppermint oil | 0.001 - 10% | 0.001 - 10% | 0.001 - 10% |
| wintergreen oil | 0.001 - 10% | 0.001 - 10% | 0.001 - 10% |
| sassafras oil | 0.001 - 10% | 0.001 - 10% | 0.001 - 10% |
| chlorophyll oil | 0.001 - 10% | 0.001 - 10% | 0.001 - 10% |
| citral oil | 0.001 - 10% | 0.001 - 10% | 0.001 - 10% |
| geraniol oil | 0.001 - 10% | 0.001 - 10% | 0.001 - 10% |
| cardamom oil | 0.001 - 10% | 0.001 - 10% | 0.001 - 10% |
| clove oil | 0.001 - 10% | 0.001 - 10% | 0.001 - 10% |
| sage oil | 0.001 - 10% | 0.001 - 10% | 0.001 - 10% |
| carvacrol oil | 0.001 - 10% | 0.001 - 10% | 0.001 - 10% |
| eucalyptus oil | 0.001 - 10% | 0.001 - 10% | 0.001 - 10% |
| cardamom oil | 0.001 - 10% | 0.001 - 10% | 0.001 - 10% |
| magnolia bark extract oil | 0.001 - 10% | 0.001 - 10% | 0.001 - 10% |
| marjoram oil | 0.001 - 10% | 0.001 - 10% | 0.001 - 10% |
| cinnamon oil | 0.001 - 10% | 0.001 - 10% | 0.001 - 10% |
| lemon oil | 0.001 - 10% | 0.001 - 10% | 0.001 - 10% |
| lime oil | 0.001 - 10% | 0.001 - 10% | 0.001 - 10% |
| grapefruit oil | 0.001 - 10% | 0.001 - 10% | 0.001 - 10% |
| orange oil | 0.001 - 10% | 0.001 - 10% | 0.001 - 10% |
| cinnamic aldehyde | 0.001 - 10% | 0.001 - 10% | 0.001 - 10% |
| salicylaldehyde | 0.001 - 10% | 0.001 - 10% | 0.001 - 10% |
| menthol | 0.001 - 10% | 0.001 - 10% | 0.001 - 10% |
| carvone | 0.001 - 10% | 0.001 - 10% | 0.001 - 10% |
| iso-garrigol | 0.001 - 10% | 0.001 - 10% | 0.001 - 10% |
| anethole | 0.001 - 10% | 0.001 - 10% | 0.001 - 10% |
| zinc citrate | 0.01 - 25% | 0.01 - 25% | 0.1 - 15% |
| zinc acetate | 0.01 - 25% | 0.01 - 25% | 0.1 - 15% |
| zinc fluoride | 0.01 - 25% | 0.01 - 25% | 0.1 - 15% |
| zinc ammonium sulfate | 0.01 - 25% | 0.01 - 25% | 0.1 - 15% |
| zinc bromide | 0.01 - 25% | 0.01 - 25% | 0.1 - 15% |
| zinc iodide | 0.01 - 25% | 0.01 - 25% | 0.1 - 15% |
| zinc chloride | 0.01 - 25% | 0.01 - 25% | 0.1 - 15% |
| zinc nitrate | 0.01 - 25% | 0.01 - 25% | 0.1 - 15% |
| zinc flurosilicate | 0.01 - 25% | 0.01 - 25% | 0.1 - 15% |
| zinc gluconate | 0.01 - 25% | 0.01 - 25% | 0.1 - 15% |
| zinc tartarate | 0.01 - 25% | 0.01 - 25% | 0.1 - 15% |
| zinc succinate | 0.01 - 25% | 0.01 - 25% | 0.1 - 15% |
| zinc formate | 0.01 - 25% | 0.01 - 25% | 0.1 - 15% |
| zinc chromate | 0.01 - 25% | 0.01 - 25% | 0.1 - 15% |
| zinc phenol sulfonate | 0.01 - 25% | 0.01 - 25% | 0.1 - 15% |
| zinc dithionate | 0.01 - 25% | 0.01 - 25% | 0.1 - 15% |
| zinc sulfate | 0.01 - 25% | 0.01 - 25% | 0.1 - 15% |
| silver nitrate | 0.01 - 25% | 0.01 - 25% | 0.1 - 15% |
| zinc salicylate | 0.01 - 25% | 0.01 - 25% | 0.1 - 15% |
| zinc glycerophosphate | 0.01 - 25% | 0.01 - 25% | 0.1 - 15% |
| copper nitrate | 0.01 - 25% | 0.01 - 25% | 0.1 - 15% |
| chlorophyll | 0.01 - 25% | 0.01 - 25% | 0.1 - 15% |
| copper chlorophyll | 0.01 - 25% | 0.01 - 25% | 0.1 - 15% |
| chlorophyllin | 0.01 - 25% | 0.01 - 25% | 0.1 - 15% |
| hydrogenated cottonseed oil | 0.5 - 5% | 0.5 - 70% | 0.5 - 15% |
| chlorine dioxide | 0.025 - 0.50 % | 0.025 - 0.50 % | 0.025 - 0.50 % |
| beta cyclodextrin | 0.1 - 5% | 0.1 - 5% | 0.1 - 5% |
| zeolite | 0.1 - 5% | 0.1 - 5% | 0.1 - 5% |
| silica-based materials | 0.1 - 5% | 0.1 - 5% | 0.1 - 5% |
| carbon-based materials | 0.1 - 5% | 0.1 - 5% | 0.1 - 5% |
| enzymes such as laccase, papain, krillase, amylase, glucose oxidase | 0.1 - 5% | 0.1 - 5% | 0.1 - 5% |

| **C. Anti-microbial agents** | | | |
|---|---|---|---|
| cetylpyridinium chloride | 0.01 - 1% | 0.01 - 1% | 0.01 - 1% |
| zinc compounds | 0.01 - 25% | 0.01 - 25% | 0.1 - 15% |
| copper compounds | 0.01 - 25% | 0.01 - 25% | 0.1 - 15% |

| **D. Antibacterial agents** | | | |
|---|---|---|---|
| chlorhexidine | 0.0025-2% | 0.0025-2% | 0.0025-2% |
| alexidine | 0.0025-2% | 0.0025-2% | 0.0025-2% |
| quaternary ammonium salts | 0.0025-2% | 0.0025-2% | 0.0025-2% |
| benzethonium chloride | 0.0025-2% | 0.0025-2% | 0.0025-2% |
| cetyl pyridinium chloride | 0.0025-2% | 0.0025-2% | 0.0025-2% |
| 2,4,4'-trichloro-2'-hydroxydiphenyl ether (triclosan) | 0.0025-2% | 0.0025-2% | 0.0025-2% |

| **E. Anti-calculus agents** | | | |
|---|---|---|---|
| pyrophosphates | 1 - 6% | 1 - 6% | 1 - 6% |
| triphosphates | 0.1 - 10% | 0.1 - 10% | 0.1 - 10% |
| polyphosphates | 0.1 - 10% | 0.1 - 10% | 0.1 - 10% |
| polyphosphonates | 0.1 - 10% | 0.1 - 10% | 0.1 - 10% |
| dialkali metal pyrophosphate salt | 1 - 6% | 1 - 6% | 1 - 6% |
| tetra alkali polyphosphate salt | 0.1 - 10% | 0.1 - 10% | 0.1 - 10% |
| tetrasodium pyrophosphate | 1 - 6% | 1 - 6% | 1 - 6% |
| tetrapotassium pyrophosphate | 1 - 6% | 1 - 6% | 1 - 6% |
| sodium tripolyphosphate | 0.1 - 10% | 0.1 - 10% | 0.1 - 10% |

| **F. Anti-plaque agents** | | | |
|---|---|---|---|
| chlorhexidine | 0.0025-2% | 0.0025-2% | 0.0025-2% |
| triclosan | 0.01 - 2% | 0.01 - 2% | 0.01 - 2% |
| hexetidine | 0.01 - 2% | 0.01 - 2% | 0.01 - 2% |
| zinc citrate | 0.01 - 25% | 0.01 - 25% | 0.1 - 15% |
| essential oils | 0.001 - 10% | 0.001 - 10% | 0.001 - 10% |
| sodium lauryl sulfate | 0.001 - 2% | 0.001 - 2% | 0.001 - 2% |

| **G. Fluoride compounds** | | | |
|---|---|---|---|
| sodium fluoride | 0.01 - 1% | 0.01 - 1% | 0.01 - 1% |
| sodium monofluorophosphate | 0.01 - 1% | 0.01 - 1% | 0.01 - 1% |
| stannous fluoride | 0.01 - 1% | 0.01 - 1% | 0.01 - 1% |

| **H. Quaternary ammonium compounds** | | | |
|---|---|---|---|
| Benzalkonium Chloride | 0.01 - 1% | 0.01 - 1% | 0.01 - 1% |
| Benzethonium Chloride | 0.01 - 1% | 0.01 - 1% | 0.01 - 1% |
| Cetalkonium Chloride | 0.01 - 1% | 0.01 - 1% | 0.01 - 1% |
| Cetrimide | 0.01 - 1% | 0.01 - 1% | 0.01 - 1% |
| Cetrimonium Bromide | 0.01 - 1% | 0.01 - 1% | 0.01 - 1% |
| Cetylpyridinium Chloride | 0.01 - 1% | 0.01 - 1% | 0.01 - 1% |
| Glycidyl Trimethyl Ammonium Chloride | 0.01 - 1% | 0.01 - 1% | 0.01 - 1% |
| Stearalkonium Chloride | 0,01 - 1% | 0.01 - 1% | 0.01 - 1% |

| **I. Remineralization agents** | | | |
|---|---|---|---|
| phosphopeptide-amorphous calcium phosphate | 0.1 - 5% | 0.1 - 5% | 0.1 - 5% |
| casein phosphoprotein-calcium phosphate complex | 0.1 - 5% | 0.1 - 5% | 0.1 - 5% |
| casein phosphopeptide-stabilized calcium phosphate | 0.1 - 5% | 0.1 - 5% | 0.1 - 5% |

| **J. Pharmaceutical actives** | | | |
|---|---|---|---|
| drugs or medicaments | 0.0001 - 10% | 0.0001 - 10% | 0.0001 - 10/% |
| vitamins and other dietary supplements | 0.0001 - 10% | 0.0001 - 10% | 0.0001 - 10% |
| minerals | 0.0001 - 10% | 0.0001 - 10% | 0.0001 - 10% |
| caffeine | 0.0001 - 10% | 0.0001 - 10% | 0.0001 - 10% |
| nicotine | 0.0001 - 10% | 0.0001 - 10% | 0.0001 - 10% |
| fruit juices | 2 - 10% | 2 - 60% | 1 - 15% |

| **K. Micronutrients** | | | |
|---|---|---|---|
| vitamin A | 0.0001 - 10% | 0.0001 - 10% | 0.0001 - 10% |
| vitamin D | 0.0001 - 10% | 0.0001 - 10% | 0.0001 - 10% |
| vitamin E | 0.0001 - 10% | 0.0001 - 10% | 0.0001 - 10% |
| vitamin K | 0.0001 - 10% | 0.0001 - 10% | 0.0001 - 10% |
| vitamin C ascorbic acid | 0.0001 - 10% | 0.0001 - 10% | 0.0001 - 10% |
| B vitamins (thiamine or B1, riboflavoin or B2, niacin or B3, pyridoxine or B6, folic acid or B9, cyanocobalimin or B12, pantothenic acid, biotin) | 0.0001 - 10% | 0.0001 - 10% | 0.0001 - 10% |
| sodium | 0.0001 - 10% | 0.0001 - 10% | 0.0001 - 10% |
| magnesium | 0.0001 - 10% | 0.0001 - 10% | 0.0001 - 10% |
| chromium | 0.0001 - 10% | 0.0001 - 10% | 0.0001 - 10% |
| iodine | 0.0001 - 10% | 0.0001 - 10% | 0.0001 - 10% |
| iron | 0.0001 - 10% | 0.0001 - 10% | 0.0001 - 10% |
| manganese | 0.0001 - 10% | 0.0001 - 10% | 0.0001 - 10% |
| calcium | 0.0001 - 10% | 0.0001 - 10% | 0.0001 - 10% |
| copper | 0.0001 - 10% | 0.0001 - 10% | 0.0001 - 10% |
| fluoride | 0.0001 - 10% | 0.0001 - 10% | 0.0001 - 10% |
| potassium | 0.0001 - 10% | 0.0001 - 10% | 0.0001 - 10% |
| phosphorous | 0.0001 - 10% | 0.0001 - 10% | 0.0001 - 10% |
| molybdenum | 0.0001 - 10% | 0.0001 - 10% | 0.0001 - 10% |
| selenium | 0.0001 - 10% | 0.0001 - 10% | 0.0001 - 10% |
| zinc | 0.0001 - 10% | 0.0001 - 10% | 0.0001 - 10% |
| L-carnitine | 0.0001 - 10% | 0.0001 - 10% | 0.0001 - 10% |
| choline | 0.0001 - 10% | 0.0001 - 10% | 0.0001 - 10% |
| coenzyme Q10 | 0.0001 - 10% | 0.0001 - 10% | 0.0001 - 10% |
| alpha-lipoic acid | 0.0001 - 10% | 0.0001 - 10% | 0.0001 - 10% |
| omega-3-fatty acids | 0.0001 - 10% | 0.0001 - 10% | 0.0001 - 10% |
| pepsin | 0.0001 - 10% | 0.0001 - 10% | 0.0001 - 10% |
| phytase | 0.0001 - 10% | 0.0001 - 10% | 0.0001 - 10% |
| trypsin | 0.0001 - 10% | 0.0001 - 10% | 0.0001 - 10% |
| lipases | 0.0001 - 10% | 0.0001 - 10% | 0.0001 - 10% |
| proteases | 0.0001 - 10% | 0.0001 - 10% | 0.0001 - 10% |
| cellulases | 0.0001 - 10% | 0.0001 - 10% | 0.0001 - 10% |
| ascorbic acid | 0.0001 - 10% | 0.0001 - 10% | 0.0001 - 10% |
| citric acid | 0.0001 - 10% | 0.0001 - 10% | 0.0001 - 10% |
| rosemary oil | 0.0001 - 10% | 0.0001 - 10% | 0.0001 - 10% |
| vitamin A | 0.0001 - 10% | 0.0001 - 10% | 0.0001 - 10% |
| vitamin E phosphate | 0.0001 - 10% | 0.0001 - 10% | 0.0001 - 10% |
| tocopherols | 0.0001 - 10% | 0.0001 - 10% | 0.0001 - 10% |
| di-alpha-tocopheryl phosphate | 0.0001 - 10% | 0.0001 - 10% | 0.0001 - 10% |
| tocotrienols | 0.0001 - 10% | 0.0001 - 10% | 0.0001 - 10% |
| alpha lipoic acid | 0.0001 - 10% | 0.0001 - 10% | 0.0001 - 10% |
| dihydrolipoic acid | 0.0001 - 10% | 0.0001 - 10% | 0.0001 - 10% |
| xanthophylls | 0.0001 - 10% | 0.0001 - 10% | 0.0001 - 10% |
| beta cryptoxanthin | 0.0001 - 10% | 0.0001 - 10% | 0.0001 - 10% |
| lycopene | 0.0001 - 10% | 0.0001 - 10% | 0.0001 - 10% |
| lutein | 0.0001 - 10% | 0.0001 - 10% | 0.0001 - 10% |
| zeaxanthin | 0.0001 - 10% | 0.0001 - 10% | 0.0001 - 10% |
| beta-carotene | 0.0001 - 10% | 0.0001 - 10% | 0.0001 - 10% |
| carotenes | 0.0001 - 10% | 0.0001 - 10% | 0.0001 - 10% |
| mixed carotenoids | 0.0001 - 10% | 0.0001 - 10% | 0.0001 - 10% |
| polyphenols | 0.0001 - 10% | 0.0001 - 10% | 0.0001 - 10% |
| flavonoids | 0.0001 - 10% | 0.0001 - 10% | 0.0001 - 10% |
| cartotenoids | 0.0001 - 10% | 0.0001 - 10% | 0.0001 - 10% |
| chlorophyll | 0.0001 - 10% | 0.0001 - 10% | 0.0001 - 10% |
| chlorophyllin | 0.0001 - 10% | 0.0001 - 10% | 0.0001 - 10% |
| fiber | 0.0001 - 10% | 0.0001 - 10% | 0.0001 - 10% |
| anthocyanins | 0.0001 - 10% | 0.0001 - 10% | 0.0001 - 10% |
| cyaniding | 0.0001 - 10% | 0.0001 - 10% | 0.0001 - 10% |
| delphinidin | 0.0001 - 10% | 0.0001 - 10% | 0.0001 - 10% |
| malvidin | 0.0001 - 10% | 0.0001 - 10% | 0.0001 - 10% |
| pelargonidin | 0.0001 - 10% | 0.0001 - 10% | 0.0001 - 10% |
| peonidin | 0.0001 - 10% | 0.0001 - 10% | 0.0001 - 10% |
| petunidin | 0.0001 - 10% | 0.0001 - 10% | 0.0001-10% |
| flavanols | 0.0001 - 10% | 0.0001 - 10% | 0.0001 - 10% |
| flavonols | 0.0001 - 10% | 0.0001 - 10% | 0.0001 - 10% |
| catechin | 0.0001 - 10% | 0.0001 - 10% | 0.0001 - 10% |
| epicatechin | 0.0001 - 10% | 0.0001 - 10% | 0.0001 - 10% |
| epigallocatechin | 0.0001 - 10% | 0.0001 - 10% | 0.0001 - 10% |
| epigallocatechingallate | 0.0001 - 10% | 0.0001 - 10% | 0.0001 - 10% |
| theaflavins | 0.0001 - 10% | 0.0001 - 10% | 0.0001 - 10% |
| thearubigins | 0.0001 - 10% | 0.0001 - 10% | 0.0001 - 10% - |
| proanthocyanins | 0.0001 - 10% | 0.0001 - 10% | 0.0001 - 10% |
| quercetin | 0.0001 - 10% | 0.0001 - 10% | 0.0001 - 10% |
| kaempferol | 0.0001 - 10% | 0.0001 - 10% | 0.0001 - 10% |
| myricetin | 0.0001 - 10% | 0.0001 - 10% | 0.0001 - 10% |
| isorhamnetin | 0.0001 - 10% | 0.0001 - 10% | 0.0001 - 10% |
| flavononeshesperetin | 0.0001 - 10% | 0.0001 - 10% | 0.0001 - 10% |
| naringenin | 0.0001 - 10% | 0.0001 - 10% | 0.0001 - 10% |
| eriodictyol | 0.0001 - 10% | 0.0001 - 10% | 0.0001 - 10% |
| tangeretin | 0.0001 - 10% | 0.0001 - 10% | 0.0001 - 10% |
| flavones | 0.0001 - 10% | 0.0001 - 10% | 0.0001 - 10% |
| apigenin | 0.0001 - 10% | 0.0001 - 10% | 0.0001 - 10% |
| luteolin | 0.0001 - 10% | 0.0001 - 10% | 0.0001 - 10% |
| lignans | 0.0001 - 10% | 0.0001 - 10% | 0.0001 - 10% |
| phytoestrogens | 0.0001 - 10% | 0.0001 - 10% | 0.0001 - 10% |
| resveratrol | 0.0001 - 10% | 0.0001 - 10% | 0.0001 - 10% |
| isoflavones | 0.0001 - 10% | 0.0001 - 10% | 0.0001 - 10% |
| daidzein | 0.0001 -10% | 0.0001 - 10% | 0.0001 - 10% |
| genistein | 0.0001 - 10% | 0.0001 - 10% | 0.0001 - 10% |
| soy isoflavones | 0.0001 - 10% | 0.0001 - 10% | 0.0001 - 10% |

| **L. Throat care actives** | | | |
|---|---|---|---|
| **(1) analgesics, anesthetics, antipyretic and antiinflammatory agents** | | | |
| menthol | 10-500 ppm | 10-500 ppm | 500 - 20,000 ppm |
| phenol | 0.1 - 10% | 0.1 - 50% | 0.1 - 20% |
| hexylresorcinol | 0.1 - 10% | 0,1 - 50% | 0.1 - 20% |
| benzocaine | 0.1 - 10% | 0.1 - 50% | 0.1 - 20% |
| dyclonine hydrochloride | 0.1 - 10% | 0.1 - 50% | 0.1 - 20% |
| benzyl alcohol | 0.1 - 10% | 0.1 - 50% | 0.1 - 20% |
| salicyl alcohol | 0.1 - 10% | 0.1 - 50% | 0.1 - 20% |
| acetaminophen | 0.1 - 10% | 0.1 - 50% | 0.1 - 20% |
| aspirin | 0.1 - 10% | 0.1 - 50% | 0.1 - 20% |
| diclofenac | 0.1 - 10% | 0.1 - 50% | 0.1 - 20% |
| diflunisal | 0.1 - 10% | 0.1 - 50% | 0.1 - 20% |
| etodolac | 0.1 - 10% | 0.1 - 50% | 0.1 - 20% |
| fenoprofen | 0.1 - 10% | 0.1 - 50% | 0.1 - 20% |
| flurbiprofen | 0.1 - 10% | 0.1 - 50% | 0.1 - 20% |
| ibuprofen | 0.1 - 10% | 0.1 - 50% | 0.1 - 20% |
| ketoprofen | 0.1 - 10% | 0.1 - 50% | 0.1 - 20% |
| ketorolac | 0.1 - 10% | 0.1 - 50% | 0.1 - 20% |
| nabumetone | 0.1 - 10% | 0.1 - 50% | 0.1 - 20% |
| naproxen | 0.1 - 10% | 0.1 - 50% | 0.1 - 20% |
| piroxicam | 0.1 - 10% | 0.1 - 50% | 0.1 - 20% |
| caffeine | 0.0001 - 10% | 0.0001 - 10% | 0.0001 - 10% |
| lidocaine | 0.1 - 10% | 0.1 - 50% | 0.1 - 20% |
| benzocaine | 0.1 - 10% | 0.1 -50% | 0.1 - 20% |
| phenol | 0.1 - 10% | 0.1 - 50% | 0.1 - 20% |
| dyclonine | 0.1 - 10% | 0.1 - 50% | 0.1 - 20% |
| benzonotate | 0.1 - 10% | 0.1 - 50% | 0.1 - 20% |

| **(2) demulcents** | | | |
|---|---|---|---|
| slippery elm bark | 0.1 - 10% | 0.1 - 10% | O.1 - 10% |
| pectin | 0.1 - 10% | 0.1 - 10% | 0.1 - 10% |
| gelatin | 0.1 - 10% | 0.1 - 10% | 0.1 - 10% |

| **(3) antiseptics** | | | |
|---|---|---|---|
| cetylpyridinium chloride | 0.01 - 1% | 0.01 - 1% | 0.01 - 1% |
| domiphen bromide | 0.01 - 1% | 0.01 - 1% | 0.01 - 1% |
| dequalinium chloride | 0.01 - 1% | 0.01 - 1% | 0.01 - 1% |

| **(4) antitussives** | | | |
|---|---|---|---|
| chlophedianol hydrochloride | 0.0001 - 2% | 0.0001 - 2% | 0.0001 - 2% |
| codeine | 0.0001 - 2% | 0.0001 - 2% | 0.0001 - 2% |
| codeine phosphate | 0.0001 - 2% | 0.0001 - 2% | 0.0001 - 2% |
| codeine sulfate | 0.0001 - 2% | 0.0001 - 2% | 0.0001 - 2% |
| dextromethorphan | 0.0001 - 2% | 0.0001 - 2% | 0..0001 - 2% |
| dextromethorphan hydrobromide | 0.0001 - 2% | 0.0001 - 2% | 0.0001 - 2% |
| diphenhydramine citrate | 0.0001 - 2% | 0.0001 - 2% | 0.0001 - 2% |
| diphenhydramine hydrochloride | 0.0001 - 2% | 0.0001 - 2% | 0.0001 - 2% |
| dextrorphan | 0.0001 - 2% | 0.0001 - 2% | 0.0001 - 2% |
| diphenhydramine | 0.0001 - 2% | 0.0001 - 2% | 0.0001 - 2% |
| hydrocodone | 0.0001 - 2% | 0.0001 - 2% | 0.0001 - 2% |
| noscapine | 0.0001 - 2% | 0.0001 - 2% | 0.0001 - 2% |
| oxycodone | 0.0001 - 2% | 0.0001 - 2% | 0.0001 - 2% |
| pentoxyverine | 0.0001 - 2% | 0.0001 - 2% | 0.0001 - 2% |

| **(5) throat soothing agents** | | | |
|---|---|---|---|
| honey | 0.5 - 25% | 0.5 - 90% | 0.5 - 15% |
| propolis | 0.1 - 10% | 0.1 - 10% | 0.1 - 10% |
| aloe vera | 0.1 - 10% | 0.1 - 10% | 0.1 - 10% |
| glycerine | 0.1 - 10% | 0.1 - 10% | 0.1 - 10% |
| menthol | 10-500 ppm | 10-500 ppm | 500 - 20,000 ppm |

| **(6) cough suppressants** | | | |
|---|---|---|---|
| codeine | 0.0001 - 2% | 0.0001 - 2% | 0.0001 - 2% |
| antihistamines | 0.0001 - 2% | 0.0001 - 2% | 0.0001 - 2% |
| dextromethorphan | 0.0001 - 2% | 0.0001 - 2% | 0.0001 - 2% |
| isoproterenol | 0.0001 - 2% | 0.0001 - 2% | 0.0001 - 2% |

| **(7) expectorants** | | | |
|---|---|---|---|
| ammonium chloride | 0.0001 - 2% | 0.0001 - 2% | 0.0001 - 2% |
| guaifenesin | 0.0001 - 2% | 0.0001 - 2% | 0.0001 - 2% |
| ipecac fluid extract | 0.0001 - 2% | 0.0001 - 2% | 0.0001 - 2% |
| potassium iodide | 0.0001 - 2% | 0.0001 - 2% | 0.0001 - 2% |

| **(8) mucolytics** | | | |
|---|---|---|---|
| acetylcycsteine | 0.0001 - 2% | 0.0001 - 2% | 0.0001 - 2% |
| ambroxol . | 0.0001 - 2% | 0.0001 - 2% | 0.0001 - 2% |
| bromhexine | 0.0001 - 2% | 0.0001 - 2% | 0.0001 - 2% |

| **(9) antihistamines** | | | |
|---|---|---|---|
| acrivastine | 0.05 - 10% | 0.05 - 10% | 0.05 - 10% |
| azatadine | 0.05 - 10% | 0.05 - 10% | 0.05 - 10% |
| brompheniramine | 0.05 - 10% | 0.05 - 10% | 0.05 - 10% |
| chlorpheniramine | 0.05 - 10% | 0.05 - 10% | 0.05 - 10% |
| clemastine | 0.05 - 10% | 0.05 - 10% | 0.05 - 10% |
| cyproheptadine | 0.05 - 10% | 0.05 - 10% | 0.05 - 10% |
| dexbrompheniramine | 0.05 - 10% | 0.05 - 10% | 0.05 - 10% |
| dimenhydrinate | 0.05 - 10% | 0.05 - 10% | 0.05 - 10% |
| diphenhydramine | 0.05 - 10% | 0.05 - 1 0% | 0.05 - 10% |
| doxylamine | 0.05 - 10% | 0.05 - 10% | 0.05 - 10% |
| hydroxyzine | 0.05 - 10% | 0.05 - 10% | 0.05 - 10% |
| meclizine | 0.05 - 10% | 0.05 - 10% | 0.05 - 10% |
| phenindamine | 0.05 - 10% | 0.05 - 10% | 0.05 - 10% |
| phenyltoloxamine | 0.05 - 10% | 0.05 - 10% | 0.05 - 10% |
| promethazine | 0.05 - 10% | 0.05 - 10% | 0.05 - 10% |
| pyrilamine | 0.05 - 10% | 0.05 - 10% | 0.05 - 10% |
| tripelennamine | 0:05 - 10% | 0.05 - 10% | 0.05 - 10% |
| triprolidine | 0.05 - 10% | 0.05 - 10% | 0.05 - 10% |
| astemizole | 0.05 - 10% | 0.05 - 10% | 0.05 - 10% |
| cetirizine | 0.05 - 10% | 0.05 - 10% | 0.05 - 10% |
| ebastine | 0.05 - 10% | 0.05 - 10% | 0.05 - 10% |
| fexofenadine | 0.05 - 10% | 0.05 - 10% | 0.05 - 10% |
| loratidine | 0.05 - 10% | 0.05 - 10% | 0.05 - 10% |
| terfenadine | 0.05 - 10% | 0.05 - 10% | 0.05 - 10% |

| **(10) nasal decongestants** | | | |
|---|---|---|---|
| phenylpropanolamine | 0.1 - 10% | 0.1 - 50% | 0.1 - 20% |
| pseudoephedrine | 0.1 - 10% | 0.1 - 50% | 0.1 - 20% |
| ephedrine | 0.1 - 10% | 0.1 - 50% | 0.1 - 20% |
| phenylephrine | 0.1 - 10% | 0.1 - 50% | 0.1 - 20% |
| oxymetazoline | 0.1 - 10% | 0.1 - 50% | 0.1 - 20% |
| menthol | 0.1 - 10% | 0.1 - 50% | 0.1 - 20% |
| camphor | 0.1 - 10% | 0.1 - 50% | 0.1 - 20% |
| borneol | 0.1 - 10% | 0.1 - 50% | 0.1 - 20% |
| ephedrine | 0.1 - 10% | 0.1 - 50% | 0.1 - 20% |
| eucalyptus oil | 0.001 - 10% | 0.001 - 10% | 0.001 - 10% |
| peppermint oil | 0.001 - 10% | 0.001 - 10% | 0.001 - 10% |
| methyl salicylate | 0.001 - 10% | 0.001 - 10% | 0.001 - 10% |
| bornyl acetate | 0.001 - 10% | 0.001 - 10% | 0.001 - 10% |
| lavender oil | 0.001 - 10% | 0.001 - 10% | 0.001 - 10% |
| wasabi extracts | 0.001 - 10% | 0.001 - 10% | 0.001 - 10% |
| horseradish extracts | 0.001 - 10% | 0.001 - 10% | 0.001 - 10% |

| **M. Tooth whitening/ Stain removing agents** | | | |
|---|---|---|---|
| surfactants | 0.001 - 2% | 0.001 - 2% | 0.001 - 2% |
| chelators | 0.1 - 10% | 0.1 - 10% | 0.1 - 10% |
| abrasives | 0.1 - 5% | 0.1 - 5% | 0.1 - 5% |
| oxidizing agents | 0.1 - 5% | 0.1 - 5% | 0.1 - 5% |
| hydrolytic agents | 0.1 - 5% | 0.1 - 5% | 0.1 - 5% |

| **N. Energy boosting agents** | | | |
|---|---|---|---|
| caffeine | 0.0001 - 10% | 0.0001 - 10% | 0.0001 - 10% |
| vitamins | 0.0001 - 10% | 0.0001 - 10% | 0.0001 - 10% |
| minerals | 0.0001 - 10% | 0.0001 - 10% | 0.0001 - 10% |
| amino acids | 0.0001 - 10% | 0.0001 - 10% | 0.0001 - 10% |
| ginseng extract | 0.0001 - 10% | 0.0001 - 10% | 0.0001 - 10% |
| ginko extract | 0.0001 - 10% | 0.0001 - 10% | 0.0001 - 10% |
| guarana extract | 0.0001 - 10% | 0.0001 - 10% | 0.0001 - 10% |
| green tea extract | 0.0001 - 10% | 0.0001 - 10% | 0.0001 - 10% |
| taurine | 0.0001 - 10% | 0.0001 - 10% | 0.0001 - 10% |
| kola nut extract | 0.0001 - 10% | 0.0001 - 10% | 0.0001 - 10% |
| yerba mate leaf | 0.0001 - 10% | 0.0001 - 10% | 0.0001 - 10% |
| Niacin | 0.0001 - 10% | 0.0001 - 10% | 0.0001 - 10% |
| rhodiola root extract | 0.0001 - 10% | 0.0001 - 10% | 0.0001 - 10% |

| **O. Concentration boosting agents** | | | |
|---|---|---|---|
| caffeine | 0.0001 - 10% | 0.0001 - 10% | 0.0001 - 10% |
| ginko extract | 0.0001 - 10% | 0.0001 - 10% | 0.0001 - 10% |
| gotu cola (centella asiatica) | 0.0001 - 10% | 0.0001 - 10% | 0.0001 - 10% |
| German chamomile | 0.0001 - 10% | 0.0001 - 10% | 0.0001 - 10% |
| avina sativa | 0.0001 - 10% | 0.0001 - 10% | 0.0001 - 10% |
| phosphatidyl serine | 0.0001 - 10% | 0.0001 - 10% | 0.0001 - 10% |
| aspalathus linearis | 0.0001 - 10% | 0.0001 - 10% | 0.0001 - 10% |
| pregnenolone | 0.0001 - 10% | 0.0001 - 10% | 0.0001 - 10% |
| rhodiola root extract | 0.0001 - 10% | 0.0001 - 10% | 0.0001 - 10% |
| theanine | 0.0001 - 10% | 0.0001 - 10% | 0.0001 - 10% |
| vinpocetine | 0.0001 - 10% | 0.0001 - 10% | 0.0001 - 10% |

| **P. Appetite suppressants** | | | |
|---|---|---|---|
| caffeine | 0.0001 - 10% | 0.0001 - 10% | 0.0001 - 10% |
| guarana extract | 0.0001 - 10% | 0.0001 - 10% | 0.0001 - 10% |
| hoodia pordonii | 0.0001 - 10% | 0.0001 - 10% | 0.0001 - 10% |
| glucomannan | 0.0001 - 10% | 0.0001 - 10% | 0.0001 - 10% |
| calcium | 0.0001 - 10% | 0.0001 - 10% | 0.0001 - 10% |
| garcinia cambogia extract | 0.0001 - 10% | 0.0001 - 10% | 0.0001 - 10% |
| n-acetyl-tyrosine | 0.0001 - 10% | 0.0001 - 10% | 0.0001 - 10% |
| soy phospholipids | 0.0001 - 10% | 0.0001 - 10% | 0.0001 - 10% |

| **V. Colors** | | | |
|---|---|---|---|
| Annatto extract | 0.5 - 10% | 0.5 - 20% | 0.5 - 10% |
| Beta-carotene | 0.5 - 10% | 0.5 - 20% | 0.5 - 10% |
| Canthaxanthin | 0.5 - 10% | 0.5 - 20% | 0.5 - 10% |
| Grape color extract | 0.5 - 10% | 0.5 - 20% | 0.5 - 10% |
| Turmeric oleoresin | 0.5 - 10% | 0.5 - 20% | 0.5 - 10% |
| B-Apo-8'-carotenal | 0.5 - 10% | 0.5 - 20% | 0.5 - 10% |
| Beet powder | 0.5 - 10% | 0.5 - 20% | 0.5 - 10% |
| Caramel color | 0.5 - 10% | 0.5 - 20% | 0.5 - 10% |
| Carmine | 0.5 - 10% | 0.5 - 20% | 0.5 - 10% |
| Cochineal extract | 0.5 - 10% | 0.5 - 20% | 0.5 - 10% |
| Grape skin extract | 0.5 - 10% | 0.5 - 20% | 0.5 - 10% |
| Saffron | 0.5 - 10% | 0.5 - 20% | 0.5 - 10% |
| Tumeric | 0.5 - 10% | 0.5 - 20% | 0.5 - 10% |
| Titanium dioxide | 0.05 - 2% | 0.05 - 2% | 0.05 - 2% |
| F.D. & C. Blue No.1 | 0.05 - 2% | 0.05 - 2% | 0.05 - 2% |
| F.D.& C. Blue No.2 | 0.05 - 2% | 0.05 - 2% | 0.05 - 2% |
| F.D.& C. Green No.1 | 0.05 - 2% | 0.05 - 2% | 0.05 - 2% |
| F.D. & C. Red No.40 | 0.05 - 2% | 0.05 - 2% | 0.05 - 2% |
| F.D. & C. Red No.3 | 0.05 - 2% | 0.05 - 2% | 0.05 - 2% |
| F.D. & C. Yellow No.6 | 0.05 - 2% | 0.05 - 2% | 0.05 - 2% |
| F.D. & C. Yellow No.5 | 0.05 - 2% | 0.05 - 2% | 0.05 - 2% |

The features and advantages of the present invention are more fully shown by the following examples which are provided for purposes of illustration, and are not to be construed as limiting the invention in any way.

### Examples A-H

The following Examples B, C, E, G and H as set forth in Tables 2 and 3 are directed to inventive center-fill chewing gum compositions of some embodiments. Examples A, D and F are not comprised in the invention. The center-fill regions of the compositions include one or more polyol powders suspended in a fluid carrier, which includes glycerin and hydrogenated starch hydrolysate.

**Table 2: Liquid Center-Fill Compositions**

| **Ingredient** | **%w/w of Center-Fill Composition** | | | | | | | |
|---|---|---|---|---|---|---|---|---|
| | **A** | **B** | **C** | **D** | **E** | **F** | **G** | **H** |
| Glycerin | 15-50 | 15-50 | 15-50 | 15-50 | 15-50 | 15-50 | 15-50 | 15-50 |
| Hydrogenated Starch Hvdrolvsate | 20-30 | 20-30 | 20-30 | 20-30 | 20-30 | 20-30 | 20-30 | 20-30 |
| Sorbitol Powder | 35-65 | | | 10-50 | | 10-50 | | |
| Xylitol Powder | | 35-65 | | 10-50 | 10-50 | | | 35-65 |
| Erythritol Powder | | | 35-65 | | 10-50 | 10-50 | 35-65 | |
| Flavor | 0.5-3.0 | 0.5-3.0 | 0.5-3.0 | 0.5-3.0 | 0.5-3.0 | 0.5-3.0 | 0.5-3.0 | 0.5-3.0 |
| WS3 | 0.01-0.50 | | | 0.01-0.50 | | 0.01-0.50 | | |
| WS23 | | 0.01-0.50 | | 0.01-0.50 | 0.01-0.50 | | | 0.01-0.50 |
| Menthyl glutarate | | | 0.01-0.50 | | 0.01-0.50 | 0.01-0.50 | | 0.01-0.50 |
| Menthol | 0.01-0.50 | | | 0.01-0.50 | 0.01-0.50 | | | 0.01-0.50 |
| Color | 0.01-0.50 | 0.01-0.50 | 0.01-0.50 | 0.01-0.50 | 0.01-0.50 | 0.01-0.50 | 0.01-0.50 | 0.01-0.50 |
| Acesulfame K | 0.005-1.5 | 0.005-1.5 | | 0.005-1.5 | | | 0.005-1.5 | |
| Aspartame | | | 0.005-1.5 | 0.005-1.5 | | | 0.005-1.5 | 0.005-1.5 |
| Sucralose | | 0.005-1.5 | | 0.005-1.5 | 0.005-1.5 | | | 0.005-1.5 |

**Table 3: Gum Region Compositions**

| **Ingredient** | **%w/w of Gum Region Composition** | | | | | | | |
|---|---|---|---|---|---|---|---|---|
| | **A** | **B** | **C** | **D** | **E** | **F** | **G** | **H** |
| Gum Base | 20-30 | 20-30 | 20-30 | 20-30 | 20-30 | 20-30 | 20-30 | 20-30 |
| Glycerin | 2-15 | 2-15 | 2-15 | 2-15 | 2-15 | 2-15 | 2-15 | 2-15 |
| Maltitol Powder | 30-50 | 30-50 | 30-50 | 30-50 | 30-50 | 30-50 | 30-50 | 30-50 |
| Sorbitol Powder | 5-25 | 5-25 | 5-25 | 5-25 | 5-25 | 5-25 | 5-25 | 5-25 |
| Hydrogenated Starch Hydrolysate | 0.5-5.0 | 0.5-5.0 | 0.5-5.0 | 0.5-5.0 | 0.5-5.0 | 0.5-5.0 | 0.5-5.0 | 0.5-5.0 |
| Flavor | 1-15 | 1-15 | 1-15 | 1-15 | 1-15 | 1-15 | 1-15 | 1-15 |
| WS3 | 0.001-1.0 | | | | 0.001-1.0 | | | |
| WS23 | | 0.001-1.0 | | | | 0.001-1.0 | | |
| Menthyl glutarate | | | 0.001-1.0 | | | | 0.001-1.0 | |
| Menthol | | | | 0.001-1.0 | 0.001-1.0 | 0.001-1.0 | 0.001-1.0 | |
| Color | 0.01-0.50 | 0.01-0.50 | 0.01-0.50 | 0.01-0.50 | 0.01-0.50 | 0.01-0.50 | 0.01-0.50 | 0.01-0.50 |
| Acesulfame K | 0.01-5.0 | | | 0.01-5.0 | | 0.01-5.0 | | 0.01-5.0 |
| Aspartame | | 0.01-5.0 | | 0.01-5.0 | 0.01-5.0 | | | 0.01-5.0 |
| Sucralose | | | 0.01-5.0 | | 0.01-5.0 | 0.01-5.0 | | 0.01-5.0 |

Gum pieces including a center-fill region and a gum region are prepared according to the compositions in Tables 2 and 3 above with each region according to the corresponding components for compositions A-H.

To prepare the center-fill compositions, the liquid glycerin and hydrogenated starch hydrolysate (HSH) ingredients are combined in a mixing vessel and mixed until homogeneous. Next, the cooling compounds are solubilized in the flavor and added to the glycerin/HSH mixture. Then, the color and high intensity sweetener (i.e. acesulfame K, aspartame and/or sucralose) are added to the mixture until the mixture is a uniform color. Lastly, the powdered polyol(s) is(are) added to the mixture and mixed until homogeneous.

To prepare the gum region, the gum base is melted in a mixer. The remaining ingredients are added to the molten gum base. The melted gum base with ingredients are mixed to completely disperse the ingredients. The resulting chewing gum composition may be allowed to cool or may be fed directly into a process for preparing a center-filled product.

The chewing gum and liquid center-filled compositions are then extruded together and formed into tablets by the process described above at paragraphs [0038] to [0041]. An optional coating may be applied as described above at paragraphs [0042] to [0043]. The gum pieces each have a total weight of approximately 2.2g. In the final gum pieces, the gum region is about 55-65% by weight, the liquid-fill is about 0-20% by weight, and the coating is about 20-40% by weight.

### Examples I-J

The following Examples I-J as set forth in Tables 4-6 are embodiments directed to inventive center-filled pellet gum pieces. The center-fill regions of the compositions include erythritol and xylitol particles suspended in a fluid carrier, which includes glycerin and hydrogenated starch hydrolysate.

**Table 4: Gum Region Compositions**

| **Ingredient** | **% w/w of Gum Region Composition** | |
|---|---|---|
| | **I** | **J** |
| Gum Base | 39 - 43.5-39.0 | 39.0 - 43.5 |
| Lecithin | 0.075-0.15 | 0.25-1.25 |
| Hydrogenated Starch Hydrolysate | 0.25-0.75 | 1.0-1.5 |
| Maltitol | 53.721 - 63.5 | 53.999 - 63.5 |
| Peppermint Flavor | 2.754 - 9.7 | 2.7501 - 10.7 |
| Aspartame | 0.20-1.5 | |
| Encapsulated Aspartame/Acesulf ame K blend | 4.0-5.0 | 4.0-5.0 |

**Table 5: Center-Fill Compositions**

| **Ingredient** | **% w/w of Center-Fill Composition** | |
|---|---|---|
| | **I** | **J** |
| Glycerin | 1.5-2.5 | 1.5-2.5 |
| LYCASIN | 37-47 | 37-47 |
| Erythritol Powder | 25-35 | 25-35 |
| Xylitol Powder | 25-35 | 25-35 |
| Spearmint | 2.97-4.0 | 2.97-4.0 |
| Sweetness Extender | 0.03-1.5 | 0.03-1.5 |
| Cooling Agent | 0.5408-4.5 | 0.54808 -4.5 |
| Natural Menthol Crystals | 1.2-2.5 | 1.2-2.5 |
| Bitter Masking Agent | 0.02-1.5 | 0.02-1.5 |
| Color | 0.0004-1.0 | 0.004-1.0 |
| Acesulfame Potassium | 0.75-1.5 | 0.75-1.5 |

**Table 6: Coating Compositions**

| **Ingredient** | **% w/w of Coating Composition** | |
|---|---|---|
| | **I** | **J** |
| Gum Cores | 71.4-76.0 | 72.73-78.0 |
| Maltitol Crystalline | 26.2978-31.0 | 25.2287-30.0 |
| Gelatin | 1.2183-2.25 | 1.2183-2.25 |
| Titanium Dioxide | 0.3314-1.5 | 0.1450-1.25 |
| Spearmint Flavor | 0.625 - 5.55 | 0.5505 - 5.3 |
| Acesulfame Potassium | 0.1186-0.5 | 0.1186-0.5 |
| Wax Candelilla | 0.009-0.05 | 0.009-0.05 |

Gum pieces including a center-fill region and a gum region were prepared according to the compositions in Tables 4-6 above with each region according to the corresponding components for compositions I and J.

To prepare the center-fill compositions, the liquid glycerin and hydrogenated starch hydrolysate (HSH) ingredients were combined in a mixing vessel and mixed until homogeneous. Next, erythritol and xylitol along with high intensity sweetener were added to the mixture and mixed until homogeneous. Then, the cooling compounds were solubilized in the flavor and added to the glycerin/HSH mixture along with the color. The mixture was mixed until it was a uniform color.

To prepare the gum region, the gum base was melted in a mixer. The remaining ingredients were added to the molten gum base. The melted gum base with ingredients were mixed to completely disperse the ingredients. The resulting chewing gum composition was allowed to cool and then fed directly into a process to prepare the center filled product.

The chewing gum and liquid center-fill compositions were then extruded together and formed into tablets by the process described above at paragraphs [0038] to [0041]. A coating was applied as described above at paragraphs [0042] to [0043]. The gum pieces each have a total weight of approximately 2.2g. In the final gum pieces, the gum region is about 63.182% by weight, the liquid-fill is about 9.545% by weight, and the coating is about 27.273% by weight.

### Examples K-R

The following Examples L, M, O, Q and R as set forth in Tables 7-9 are embodiments directed to inventive center-fill confectionery pieces. Examples K, N and P are not comprise in the invention. The center-fill regions of the compositions include erythritol and xylitol particles suspended in a fluid carrier, which includes glycerin and hydrogenated starch hydrolysate.

**Table 7: Center-Fill Composition**

| **Ingredient** | **%w/w of Center-Fill Composition** | | | | | | | |
|---|---|---|---|---|---|---|---|---|
| | **K** | **L** | **M** | **N** | **O** | **P** | **Q** | **R** |
| Sugar | 10-30 | | 10-30 | | 10-30 | 10-30 | | |
| Glucose | 20-60 | | 20-60 | | 20-60 | 20-60 | | |
| Vegetable Fat | 0-5 | 0-5 | 0-5 | 0-5 | 0-5 | 0-5 | 0-5 | 0-5 |
| Emulsifier | 0-0.5 | 0-0.5 | 0-0.5 | 0-0.5 | 0-0.5 | 0-0.5 | 0-0.5 | 0-0.5 |
| Hydrogenated Starch Hydrolysate | | 20-30 | | 20-30 | 5-15 | 20-30 | 5-15 | 20-30 |
| Sorbitol Powder | 35-65 | | | 10-50 | | 10-50 | | |
| Xylitol Powder | | 35-65 | | 10-50 | 10-50 | | | 35-65 |
| Erythritol Powder | | | 35-65 | | 10-50 | 10-50 | 35-65 | |
| Pectin | 0.1-1.0 | 0.1-1.0 | 0.1-1.0 | 0.1-1.0 | 0.1-1.0 | 0.1-1.0 | 0.1-1.0 | 0.1-1.0 |
| Flavor | 0.01-3.0 | 0.01-3.0 | 0.01-3.0 | 0.01-3.0 | 0.01-3.0 | 0.01-3.0 | 0.01-3.0 | 0.01-3.0 |
| Salt | 0-0.2 | 0-0.2 | 0-0.2 | 0-0.2 | 0-0.2 | 0-0.2 | 0-0.2 | 0-0.2 |
| Food Acid | 0-3.0 | 0-3.0 | 0-3.0 | 0-3.0 | 0-3.0 | 0-3.0 | 0-3.0 | 0-3.0 |
| WS3 | 0.01-0.50 | | | 0.01-0.50 | | 0.01-0.50 | | |
| WS23 | | 0.01-0.50 | | 0.01-0.50 | 0.01-0.50 | | | 0.01-0.50 |
| Menthyl glutarate | | | 0.01-0.50 | | 0.01-0.50 | 0.01-0.50 | | 0.01-0.50 |
| Menthol | 0.01-0.50 | | | 0.01-0.50 | 0.01-0.50 | | | 0.01-0.50 |
| Color | 0.01-0.50 | 0.01-0.50 | 0.01-0.50 | 0.01-0.50 | 0.01-0.50 | 0.01-0.50 | 0.01-0.50 | 0.01-0.50 |
| Acesulfame K | 0.005-1.5 | 0.005-1.5 | | 0.005-1.5 | | | 0.005-1.5 | |
| Aspartame | | | 0.005-1.5 | 0.005-1.5 | | | 0.005-1.5 | 0.005-1.5 |
| Sucralose | | 0.005-1.5 | | 0.005-1.5 | 0.005-1.5 | | | 0.005-1.5 |

**Table 8: Confectionery Region Composition**

| **Ingredient** | **%w/w of Confectionery Region Composition** | | | | | | | |
|---|---|---|---|---|---|---|---|---|
| | **K** | **L** | **M** | **N** | **O** | **P** | **Q** | **R** |
| Sugar | 20-60 | 20-60 | | | 20-60 | | 20-60 | 20-60 |
| Glucose | 20-60 | 20-60 | | | 20-60 | | 20-60 | 20-60 |
| Powdered Fondant | | 3-10 | | | 3-10 | | 3-10 | |
| Sorbitol | | | 10-90 | 10-90 | | 10-90 | | |
| Erythritol | | | 10-90 | 10-90 | | 10-90 | | |
| Hydrogenated Starch Hydrolysate | | | 10-90 | 10-90 | | 10-90 | | |
| Gelatin | 0.25-2.5 | 0.25-2.5 | 0.25-2.5 | 0.25-2.5 | 0.25-2.5 | 0.25-2.5 | 0.25-2.5 | 0.25-2.5 |
| Starch | 0.50-6.0 | 0.50-6.0 | 0.50-6.0 | 0.50-6.0 | 0.50-6.0 | 0.50-6.0 | 0.50-6.0 | 0.50-6.0 |
| Gum Arabic | 0-0.5 | 0-0.5 | 0-0.5 | 0-0.5 | 0-0.5 | 0-0.5 | 0-0.5 | 0-0.5 |
| Vegetable Fat | 0.5-10.0 | 0.5-10.0 | 0.5-10.0 | 0.5-10.0 | 0.5-10.0 | 0.5-10.0 | 0.5-10.0 | 0.5-10.0 |
| Emulsifier | 0-0.5 | 0-0.5 | 0-0.5 | 0-0.5 | 0-0.5 | 0-0.5 | 0-0.5 | 0-0.5 |
| Salt | 0-0.3 | 0-0.3 | 0-0.3 | 0-0.3 | 0-0.3 | 0-0.3 | 0-0.3 | 0-0.3 |
| Flavor | 0.01-5.0 | 0.01-5.0 | 0.01-5.0 | 0.01-5.0 | 0.01-5.0 | 0.01-5.0 | 0.01-5.0 | 0.01-5.0 |
| WS3 | 0.0001-1.0 | | | | 0.0001-1.0 | | | |
| WS23 | | 0.0001-1.0 | | | | 0.0001-1.0 | | |
| Menthyl glutarate | | | 0.0001-1.0 | | | | 0.0001-1.0 | |
| Menthol | | | | 0.0001-1.0 | 0.0001-1.0 | 0.0001-1.0 | 0.0001-1.0 | |
| Color | 0.001-0.50 | 0.001-0.50 | 0.001-0.50 | 0.001-0.50 | 0.001-0.50 | 0.001-0.50 | 0.001-0.50 | 0.001-0.50 |
| Acesulfame K | 0.001-5.0 | | | 0.01-5.0 | | 0.001-5.0 | | 0.001-5.0 |
| Aspartame | | 0.001-5.0 | | 0.001-5.0 | 0.001-5.0 | | | 0.001-5.0 |
| Sucralose | | | 0.001-5.0 | | 0.001-5,0 | 0.001-5.0 | | 0.001-5.0 |

**Table 9: Coating Composition**

| **Ingredient** | **%w/w of Coating Composition** | | | | | | | |
|---|---|---|---|---|---|---|---|---|
| | **K** | **L** | **M** | **N** | **O** | **P** | **Q** | **R** |
| Sugar | 90-99.9 | | | | 50-90 | | 90-99.9 | |
| Maltitol | | 90-99.9 | | | | | | 50-90 |
| Isomalt | | | 90-99.9 | | | 50-90 | | |
| Erythritol | | | | 90-99.9 | 50-90 | 50-90 | | 50-90 |
| Gum Arabic | 0-5.0 | 0-5.0 | 0-5.0 | 0-5.0 | 0-5.0 | 0-5.0 | 0-5.0 | 0-5.0 |
| Gelatine | 0-5.0 | 0-5.0 | 0-5.0 | 0-5.0 | 0-5.0 | 0-5.0 | 0-5.0 | 0-5.0 |
| Salt | 0-0.3 | 0-0.3 | 0-03 | 0-0.3 | 0-0.3 | 0-0.3 | 0-0.3 | 0-0.3 |
| Flavor | 0.01-5.0 | 0.01-5.0 | 0.01-5.0 | 0.01-5.0 | 0.01-5.0 | 0.01-5.0 | 0.01-5.0 | 0.01-5.0 |
| WS3 | 0.0001-1.0 | | | | 0.0001-1.0 | | | |
| WS23 | | 0.0001-1.0 | | | | 0.0001-1.0 | | |
| Menthyl glutarate | | | 0.0001-1.0 | | | | 0.0001-1.0 | |
| Menthol | | | | 0.0001-1.0 | 0.0001-1.0 | 0.0001-1.0 | 0.0001-1.0 | |
| Color | 0.001-0.50 | 0.001-0.50 | 0.001-0.50 | 0.001-0.50 | 0.001-0.50 | 0.001-0.50 | 0.001-0.50 | 0.001-0.50 |
| Acesulfame K | 0.001-5.0 | | | 0.01-5.0 | | 0.001-5.0 | | 0.001-5.0 |
| Aspartame | | 0.001-5.0 | | 0.001-5.0 | 0.001-5.0 | | | 0.001-5.0 |
| Sucralose | | | 0.001-5.0 | | 0.001-5.0 | 0.001-5.0 | | 0.001-5.0 |
| Wax | 0-0.1 | 0-0.1 | 0-0.1 | 0-0.1 | 0-0.1 | 0-0.1 | 0-0.1 | 0-0.1 |

Confectionery pieces including a center-fill region, a confectionery region, and optionally a coating region are prepared according to the compositions in Tables 7, 8, and 9 above with each region according to the corresponding components for compositions K-R.

To prepare the center-fill compositions, the sugar/glucose and/or the hydrogenated starch hydrolysate (HSH) ingredients are combined in a mixing vessel and mixed until homogeneous. Next, the pectin is incorporated into the mixture. Then, the cooling compounds are solubilized in the flavor and added. Then, optionally any colors, salts, acids and/or high intensity sweeteners (i.e. acesulfame K, aspartame and/or sucralose) may be added and mixed until the mixture is homogeneous. Lastly, the powdered polyol(s) is(are) added to the mixture and mixed until homogeneous.

To prepare the confectionery region, the glucose/sorbitol/erythritol/HSH are mixed with enough water to create a homogeneous mixture and the mixture is cooked to about 130°C. Then, the fat, emulsifier, and color are added while the mixture is allowed to cool. When the mixture reaches about 90°C, the hydrated gelatin/starch/gum arabic ingredients are added along with fat and emulsifier and mixed thoroughly. The mixture is then placed on a cooling table where flavor and acid are added. When the temperature of the mixture reaches about 65-70°C, the fondant (if any) is incorporated. The mixture is then pulled to a desired consistency before being fed into a process for preparing a center-filled product.

The confectionery and liquid center-filled compositions are then extruded together and formed into a desired shape configuration by the process described above at paragraphs [0038] to [0041]. An optional coating composition as shown in Table 9 may be applied as described above at paragraphs [0042] to [0043]. The confectionery pieces each have a total weight of approximately 2 g. to 10g. In the final confectionery pieces, the confectionery region is about 40-65% by weight, the liquid-fill is about 0-45% by weight, and the coating is about 0-60% by weight.

## Claims

1. A confectionery composition comprising:
(a) a center-fill composition comprising a fluid carrier and polyol particles, suspended in said fluid carrier, wherein said polyol particles are selected from erythritol, maltitol, xylitol, mannitol, isomalt, lactitol, glycerol and combinations thereof and are present in amounts of 5% to 80% by weight of said center-fill composition; and
(b) a confectionery region surrounding said center-fill composition.

2. The confectionery composition as in claim 1, further comprising a gum region surrounding said center-fill composition, said gum region comprising a gum base.

3. The confectionery composition as in claim 1, wherein said confectionery region comprises a confectionery carrier.

4. The confectionery composition of claim 1, wherein said fluid carrier comprises glycerin and a hydrogenated starch hydrolysate.

5. The confectionery composition of claim 1, wherein said polyol particles have a particle size of less than about 45 micrometers.

6. The confectionery composition of claim 1, wherein said polyol particles have a heat of solution of -180.03 J/g (-43 cal/g) or less.

7. The confectionery composition of claim 1, wherein said polyol particles are present in amounts of 4.3% to 5.2% by weight of said confectionery composition.

8. The confectionery composition of claim 1, wherein said polyol particles are selected from erythritol particles, xylitol particles and combinations thereof.

9. The composition of claim 2 or 3, wherein said confectionery composition further comprises a coating surrounding at least a portion of said confectionery region.

10. The composition of claim 9, wherein said coating further comprises at least one cooling agent.

11. The confectionery composition of claim 1, wherein the composition is a center-filled chewing gum;
(a) the center-fill composition comprising a slurry comprising:
(i) a fluid carrier selected from the group consisting of glycerin, hydrogentated starch hydrolysate and combinations thereof;
(ii) at least one cooling agent;
(b) a gum region surrounding said center-fill composition, said gum region comprising a gum base; and
(c) a coating surrounding at least a portion of said gum region.

12. A method of preparing a center-filled gum piece comprising the steps of:
(a) extruding a center-filled rope of a gum layer, wherein said rope comprises a center-fill composition comprising a fluid carrier selected from glycerin, hydrogenated starch hydrolysate and combinations thereof, and particles selected from erythritol particles, xylitol particles and combinations thereof suspended in said fluid carrier and a gum region surrounding said center-fill composition, said gum region comprising a gum base;
(b) sizing said rope;
(c) feeding said rope into a forming mechanism;
(d) forming individual pieces of said center-filled rope; and
(e) coating said individual pieces with a hard coating.

13. A method of providing a modified cooling release profile in the oral cavity individual comprising the steps of:
(a) providing a center-filled gum comprising:
(i) a center-fill composition comprising a fluid carrier comprising glycerin and hydrogenated starch hydrolysate, and particles selected from erythritol particles, xylitol particles and combinations thereof, suspended in said fluid carrier,
wherein said glycerin provides a delayed cooling release and said hydrogenated starch hydrolysate provides an immediate cooling release;
(ii) a gum region surrounding said center-fill composition, said gum region comprising a gum base; and
(iii) a coating surrounding at least a portion of said gum region; and
(b) applying the center-filled gum into the oral cavity of the individual, thereby releasing the particles therefrom to impart a modified cooling release profile in the oral cavity.

14. A method of preparing a center-filled confectionery piece comprising the steps
(a) extruding a center-filled rope of a confectionery layer, wherein said rope comprises a center-fill composition comprising a fluid carrier selected from sugar, glucose, hydrogenated starch hydrolysate and combinations thereof, and particles selected from the group consisting of erythritol particles, xylitol particles and combinations thereof suspended in said fluid carrier and a confectionery region surrounding said center-fill composition;
(b) sizing said rope;
(c) feeding said rope into a forming mechanism;
(d) forming individual pieces of said center-filled rope; and
(e) coating said individual pieces.

15. A method of providing a modified cooling release profile in the oral cavity of individual comprising the steps of:
(a) providing a center-filled confectionery comprising:
(i) a center-fill composition comprising a fluid carrier selected from sugar, glucose, hydrogenated starch hydrolysate and combinations thereof, and particles selected from erythritol particles, xylitol particles and combinations thereof, suspended in said fluid carrier;
(ii) a confectionery region surrounding said center-fill composition; and
(iii) a coating surrounding at least a portion of said confectionery region; and
(b) applying said center-filled confectionery into the oral cavity of said individual, thereby releasing the particles therefrom to impart a modified cooling release profile in the oral cavity of said individual.

## Patentansprüche

1. Süßwarenzusammensetzung, die umfasst:
(a) eine in die Mitte gefüllte Zusammensetzung, die einen flüssigen Träger und Polyolpartikel, die in dem flüssigen Träger suspendiert sind, umfasst, wobei die Polyolpartikel aus Erythrit, Maltit, Xylit, Mannit, Isomalt, Lactit, Glycerol und Kombinationen davon ausgewählt sind und in Mengen von 5 Gew.-% bis 80 Gew.-% der in die Mitte gefüllten Zusammensetzung vorhanden sind; und
(b) einen Süßwarenbereich, der die in die Mitte gefüllte Zusammensetzung umgibt.

2. Süßwarenzusammensetzung nach Anspruch 1, die ferner einen Gummibereich umfasst, der die in die Mitte gefüllte Zusammensetzung umgibt, wobei der Gummibereich eine Gummibasis umfasst.

3. Süßwarenzusammensetzung nach Anspruch 1, wobei der Süßwarenbereich einen Süßwarenträger umfasst.

4. Süßwarenzusammensetzung nach Anspruch 1, wobei der flüssige Träger Glycerin und hydriertes Stärkehydrolysat umfasst.

5. Süßwarenzusammensetzung nach Anspruch 1, wobei die Polyolpartikel eine Partikelgröße kleiner als etwa 45 Mikrometer aufweisen.

6. Süßwarenzusammensetzung nach Anspruch 1, wobei die Polyolpartikel eine Lösungswärme von -180,03 J/g (-43 cal/g) oder weniger aufweisen.

7. Süßwarenzusammensetzung nach Anspruch 1, wobei die Polyolpartikel in Mengen von 4,3 Gew.-% bis 5,2 Gew.-% der Süßwarenzusammensetzung vorhanden sind.

8. Süßwarenzusammensetzung nach Anspruch 1, wobei die Polyolpartikel aus Erythritpartikeln, Xylitpartikeln und Kombinationen davon ausgewählt sind.

9. Zusammensetzung nach Anspruch 2 oder 3, wobei die Süßwarenzusammensetzung ferner eine Beschichtung umfasst, die wenigstens einen Teil des Süßwarenbereichs umgibt.

10. Zusammensetzung nach Anspruch 9, wobei die Beschichtung ferner wenigstens ein Kühlmittel umfasst.

11. Süßwarenzusammensetzung nach Anspruch 1, wobei die Zusammensetzung ein in der Mitte gefüllter Kaugummi ist;
(a) wobei die in die Mitte gefüllte Zusammensetzung einen Brei umfasst, der umfasst:
(i) einen flüssigen Träger, der aus der Gruppe ausgewählt ist, die aus Glycerin, hydriertem Stärkehydrolysat und Kombinationen davon besteht;
(ii) wenigstens ein Kühlmittel;
(b) ein Gummibereich, der die in die Mitte gefüllte Zusammensetzung umgibt, wobei der Gummibereich eine Gummibasis umfasst; und
(c) eine Beschichtung wenigstens einen Teil des Gummibereichs umgibt.

12. Verfahren zum Zubereiten eines in der Mitte gefüllten Gummistücks, wobei das Verfahren die folgenden Schritte umfasst:
(a) Extrudieren eines in der Mitte gefüllten Strangs aus einer Gummischicht, wobei der Strang eine in die Mitte gefüllte Zusammensetzung, die einen flüssigen Träger, der aus Glycerin, hydriertem Stärkehydrolysat und Kombinationen davon ausgewählt ist, und Partikel, die aus Erythritpartikeln, Xylitpartikeln und Kombinationen davon, die in dem flüssigen Träger suspendiert sind, ausgewählt sind, umfasst, und einen Gummibereich, der die in die Mitte gefüllte Zusammensetzung umgibt, umfasst, wobei der Gummibereich eine Gummibasis umfasst;
(b) Dimensionieren des Strangs;
(c) Zuführen des Strangs in einen Formmechanismus;
(d) Bilden einzelner Stücke des in der Mitte gefüllten Strangs; und
(e) Beschichten der einzelnen Stücke mit einer harten Beschichtung.

13. Verfahren zum Bereitstellen eines modifizierten Kühlungsfreisetzungsprofils in der Mundhöhle einer Person, wobei das Verfahren die folgenden Schritte umfasst:
(a) Bereitstellen eines in der Mitte gefüllten Gummis, der umfasst:
(i) eine in die Mitte gefüllte Zusammensetzung, die einen flüssigen Träger, der Glycerin und hydriertes Stärkehydrolysat umfasst, und Partikel, die aus Erythritpartikeln, Xylitpartikeln und Kombinationen davon, die in dem flüssigen Träger suspendiert sind, ausgewählt sind, umfasst,
wobei das Glycerin eine verzögerte Kühlungsfreisetzung bereitstellt und wobei das hydrierte Stärkehydrolysat eine sofortige Kühlungsfreisetzung bereitstellt;
(ii) einen Gummibereich, der die in die Mitte gefüllte Zusammensetzung umgibt, wobei der Gummibereich eine Gummibasis umfasst; und
(iii) eine Beschichtung, die wenigstens einen Teil des Gummibereichs umgibt; und
(b) Applizieren des in der Mitte gefüllten Gummis in die Mundhöhle der Person und dadurch Freisetzen der Partikel daraus, um in der Mundhöhle ein modifiziertes Kühlungsfreisetzungsprofil zu vermitteln.

14. Verfahren zum Zubereiten eines in der Mitte gefüllten Süßwarenstücks, wobei das Verfahren die folgenden Schritte umfasst:
(a) Extrudieren eines in der Mitte gefüllten Strangs einer Süßwarenschicht, wobei der Strang eine in die Mitte gefüllte Zusammensetzung, die einen flüssigen Träger, der aus Zucker, Glucose, hydriertem Stärkehydrolysat und Kombinationen davon ausgewählt ist, und Partikel, die aus der Gruppe ausgewählt sind, die aus Erythritpartikeln, Xylitpartikeln und Kombinationen davon, die in dem flüssigen Träger suspendiert sind, besteht, umfasst, und einen Süßwarenbereich, der die in die Mitte gefüllte Zusammensetzung umgibt, umfasst;
(b) Dimensionieren des Strangs;
(c) Zuführen des Strangs in einen Formmechanismus;
(d) Formen einzelner Stücke des in der Mitte gefüllten Strangs; und
(e) Beschichten der einzelnen Stücke.

15. Verfahren zum Bereitstellen eines modifizierten Kühlungsfreisetzungsprofils in der Mundhöhle einer Person, wobei das Verfahren die folgenden Schritte umfasst:
(a) Bereitstellen einer in der Mitte gefüllten Süßware, wobei das Bereitstellen umfasst:
(i) eine in die Mitte gefüllte Zusammensetzung, die einen flüssigen Träger, der aus Zucker, Glucose, hydriertem Stärkehydrolysat und Kombinationen davon ausgewählt ist, und Partikel, die aus Erythritpartikeln, Xylitpartikeln und Kombinationen davon, die in dem flüssigen Träger suspendiert sind, ausgewählt sind, umfasst;
(ii) einen Süßwarenbereich, der die in die Mitte gefüllte Zusammensetzung umgibt; und
(iii) eine Beschichtung, die wenigstens einen Teil des Süßwarenbereichs umgibt; und
(b) Applizieren der in der Mitte gefüllten Süßware in die Mundhöhle der Person und dadurch Freisetzen der Partikel daraus, um in dem Mundraum der Person ein modifiziertes Kühlungsfreisetzungsprofil zu vermitteln.

## Revendications

1. Composition de confiserie, comprenant :
(a) une composition fourrée, comprenant un fluide porteur et des particules de polyol en suspension dans le fluide porteur, les particules de polyol étant choisies parmi l'érythritol, le maltitol, le xylitol, le mannitol, l'isomalt, le lactitol, le glycérol et leurs combinaisons et représentant de 5% à 80% du poids de la composition fourrée et
(b) une région de confiserie entourant la composition fourrée.

2. Composition de confiserie suivant la revendication 1, comprenant, en outre, une région de gomme entourant la composition fourrée, la région de gomme comprenant une base de gomme.

3. Composition de confiserie suivant la revendication 1, dans laquelle la région de confiserie comprend un support de confiserie.

4. Composition de confiserie suivant la revendication 1, dans laquelle le fluide porteur comprend de la glycérine et de l'hydolysat d'amidon hydrogéné.

5. Composition de confiserie suivant la revendication 1, dans laquelle les particules de polyol ont une granulométrie de moins d'environ 45 microns.

6. Composition de confiserie suivant la revendication, dans laquelle les particules de polyol ont une chaleur de solution inférieure ou égale à -180, 3J/g(-43 cal/g).

7. Composition de confiserie suivant la revendication 1, dans laquelle les particules de polyol représentent de 4,3% 0 5,2% du poids de la composition de confiserie.

8. Composition de confiserie suivant la revendication 1, dans laquelle les particules de polyol sont choisies parmi les particules d'érythritol, les particules de xylitol et leurs combinaisons.

9. Composition de confiserie suivant la revendication 2 ou 3, dans laquelle la composition de confiserie comprend, en outre, un enrobage entourant au moins une partie de la région de confiserie.

10. Composition de confiserie suivant la revendication 9, dans laquelle l'enrobage comprend, en outre, au moins un agent rafraîchissant.

11. Composition de confiserie suivant la revendication 1, dans laquelle la composition est une gomme à mâcher fourrée ;
(a) la composition fourrée comprend une suspension, comprenant :
(i) un fluide porteur, choisi dans le groupe consistant en la glycérine, l'hydolysat d'amidon hydrogéné et leurs combinaisons ;
(ii) au moins un agent rafraîchissant,
(b) une région de gomme entourant la composition fourrée, la région de gomme comprenant une base de gomme et
(c) un enrobage entourant au moins une partie de la région de gomme.

12. Procédé de préparation d'une pièce de gomme fourrée, comprenant les stades dans lesquels :
(a) on extrude un ruban fourré d'une couche de gomme, le ruban comprenant une composition fourrée comprenant un fluide porteur choisi parmi la glycérine, l'hydolysat d'amidon hydrogéné et leurs combinaisons et des particules choisies parmi les particules d'érythritol, les particules de xylitol et leurs combinaisons en suspension dans le fluide porteur et une région de gomme entourant la composition fourrée, la région de gomme comprenant une base de gomme ;
(b) on met le ruban à dimension ;
(c) on charge le ruban dans un mécanisme de formation
(d) on forme des pièces individuelles du ruban fourré et
(e) on enrobe les pièces individuelles d'un enrobage dur.

13. Procédé pour procurer un profil modifié de libération d'un rafraîchissant dans la cavité orale d'une personne, comprenant les stades dans lesquels :
(a) on se procure une gomme fourrée comprenant :
(i) une composition fourrée comprenant un fluide porteur, comprenant de la glycérine et de l'hydolysat d'amidon hydrogéné et des particules choisies parmi les particules d'érythritol, les particules de xylitol et leurs combinaisons en suspension dans le fluide porteur,
la glycérine procurant une libération retardée de rafraîchissement et l'hydolysat d'amidon hydrogéné procurant une libération immédiate de rafraîchissement ;
(ii) une région de gomme entourant la composition fourrée, la région de gomme comprenant une base de gomme et
(iii)un enrobage entourant au moins une partie de la région de gomme et
(b) on applique la gomme fourrée dans la cavité orale de la personne, en en libérant ainsi les particules, pour donner un profil modifié de libération de rafraîchissement dans la cavité orale.

14. Procédé de préparation d'une pièce de confiserie fourrée, comprenant les stades dans lesquels :
(a) on extrude un ruban fourré d'une couche de confiserie, le ruban comprenant une composition fourrée comprenant un fluide porteur choisi parmi le sucre, le glucose, l'hydolysat d'amidon hydrogéné et leurs combinaisons et des particules choisies dans le groupe consistant en des particules d'érythritol, des particules de xylitol et leurs combinaisons en suspension dans le fluide porteur et une région de confiserie entourant la composition fourrée ;
(b) on met le ruban à dimension
(c) on charge le ruban dans un mécanisme de formation ;
(d) on forme des pièces individuelles du ruban fourré et
(e) on enrobe les pièces individuelles.

15. Procédé pour procurer un profil modifié de libération de rafraîchissement dans la cavité orale d'une personne, comprenant les stades dans lesquels :
(a) on se procure une confiserie fourrée, comprenant :
(i) une composition fourrée comprenant un fluide porteur choisi parmi le sucre, le glucose, l'hydolysat d'amidon hydrogéné et leurs combinaisons et des particules choisies parmi des particules d'érythritol, des particules de xylitol et leurs combinaisons en suspension dans le fluide porteur ;
(ii) une région de confiserie entourant la composition fourrée et
(iii)un enrobage entourant au moins une partie de la région de confiserie et
(b) on applique la confiserie fourrée dans la cavité orale de la personne, en en libérant ainsi les particules, pour donner un profil modifié de libération de rafraîchissement dans la cavité orale de la personne.
